# EUROPÄISCHE PATENTSCHRIFT

(11) **EP 2 706 092 B1**
(45) Veröffentlichungstag und Bekanntmachung des Hinweises auf die Patenterteilung: **24.12.2014**
(21) Anmeldenummer: 13192261.9
(22) Anmeldetag: 28.08.2012
(51) Int. Cl.: C08K 7/14

(54) **Polyamidformmasse und deren Verwendung**
Polyamide moulding material and its application
Masse moulée en polyamide et son utilisation

(43) Veröffentlichungstag der Anmeldung: 12.03.2014
(62) Teilanmeldung aus: 12182021.1
(73) Patentinhaber: EMS-PATENT AG, 7013 Domat / Ems (CH)
(72) Erfinder: Stöppelmann, Georg, 7402 Bonaduz (CH); Bertram, Sabine, 7013 Domat/Ems (CH); Pfleghar, Mark, 7013 Domat/Ems (CH)
(74) Vertreter: Bremi, Tobias Hans

(56) Entgegenhaltungen:
- EP-A1- 1 882 719
- US-A1- 2009 292 048

## Beschreibung

### TECHNISCHES GEBIET

Die vorliegende Erfindung betrifft Polyamidformmassen mit verbesserten mechanischen Eigenschaften. Die Formmassen enthalten Glasfasern sowie partikuläre Füllstoffe. Daraus hergestellte Formteile sind nach partieller Bestrahlung gezielt metallisierbar. Verwendung finden die erfindungsgemäßen Formmassen insbesondere für die Herstellung von spritzgegossenen Schaltungsträgern.

### STAND DER TECHNIK

Moulded Intercontected Devices (MID) - Schaltungsträger aus thermoplastischen Kunststoffen in Spritzgiesstechnik - haben gegenüber bisherigen Schaltungsträgern den Vorteil der verbesserten Gestaltungsfreiheit, der guten Umweltverträglichkeit und des Rationalisierungspotentials bezüglich des Herstellverfahrens des Endproduktes. Die Integration von elektrischen und mechanischen Funktionen in ein Spritzgussteil kann zu einer Miniaturisierung der Baugruppe führen. Ausserdem können ganz neue Funktionen realisiert und nahezu beliebige Formen gestaltet werden. 2-Komponenten-Spritzgiessen, Heissprägen und Laser-Subtraktiv-Strukturieren sind bereits seit einigen Jahren in der Serienfertigung eingesetzte MID-Fertigungstechnologien.

Aus EP-A-1 274 288 ebenfalls bekannt ist die additive Laser-Strukturierungstechnik, bei welcher das im Standard-Spritzgiessverfahren hergestellte Formteil durch einen Laser strukturiert wird. Hierdurch werden auf der Kunststoffoberfläche partiell diejenigen Bereiche, die später die Leitungsbahnen tragen sollen, mit Metallatomen bekeimt, auf denen nachfolgend in chemisch reduktiven Metallisierungsbädern eine Metallschicht wächst. Die Metallkeime entstehen durch Aufbrechen von feinstverteilt im Trägermaterial enthaltenen Metallverbindungen. Besonders gut geeignete Metallverbindungen für die Laserdirektstrukturierung sind kupferhaltige Metalloxide mit Spinellstruktur. Nicht bestrahlte Kunststoffbereiche bleiben im Metallisierungsbad unverändert erhalten. Im einzigen Beispiel der EP-A-1 274 288 wird die Formmasse aus 70 Gew.-% Polybutylenterephthalat, 30 Gew.-% Kieselsäure und 5 Gew.-% eines Kupfer-Chrom-Spinells zu einem Gehäuse für ein Mobiltelefone verarbeitet, welches durch einen Nd-YAG-Laser bestrahlt und nachfolgend im reduktiven Verkupferungsbad metallisiert wird. In EP-A-2 420 593 wird ein Verfahren zur Herstellung von Schaltungsträgern aus Kunststoff beschrieben, bei dem Metalloxide mit einer Sauerstoff-Vakanz als LDS-(Laser Direct Structuring)-Additive verwendet werden. Als geeignete Matrix werden eine Reihe von verschiedensten Polymeren angegeben, ohne jedoch ein bestimmtes Polymer oder eine Polymerklasse zu bevorzugen. In den Beispielen werden unverstärkte Formmassen auf Basis von Polypropylen und Polycarbonat gearbeitet.

Auf Probleme mit der primären, stromlosen Metallisierung weist EP-A-2 335 936 hin. Für Polycarbonat basierte Formmassen wird die Homogenität der nach Laserstrukturierung stromlos abgeschiedenen Leiterbahnen durch Verwendung einer Säure, wie z.B. Phosphorsäure, oder eines Säuresalzes deutlich verbessert.

Eine Möglichkeit zur Verbesserung der Zähigkeit, insbesondere der Kerbschlagzähigkeit, von LDS-tauglichen Formmassen wird in EP-A-2 390 282 offenbart. Die Formmassen auf Basis von aromatischen Polycarbonaten werden durch kleine Mengen an Sulfonatsalzen, wie z.B. Kaliumperfluorbutansulfonat, in der Zähigkeit deutlich verbessert. WO-A-2009/141799 beschreibt flammfeste, laserstrukturierbare Formmassen auf Basis von Polycarbonat und Polycarbonat/ABS Blends. In den Beispielen werden ausschliesslich unverstärkte Formmassen gearbeitet, die ein Kupfer-Chrom-Spinell als LDS-Additiv enthalten.

### DARSTELLUNG DER ERFINDUNG

Ausgehend hiervon war es Aufgabe der vorliegenden Erfindung, für die MID-Technik geeignete thermoplastische Kunststoffformassen, insbesondere Polyamidformmassen, und insbesondere solche, die neben Glasfasern auch partikuläre Füllstoffe enthalten, bereitzustellen, mit denen Formkörper mit guten mechanischen Eigenschaften, insbesondere mit hoher Steifigkeit, hoher Reissfestigkeit und guter Schlagzähigkeit herstellbar sind und die nicht die Nachteile des Standes der Technik aufweisen.

Die thermischen und mechanischen Eigenschaften sowie die damit verbundenen Einsatzgebiete dieser Schaltungsträger werden in erster Linie durch die zugrundeliegende thermoplastische Formmasse bestimmt. Polyamide sind heutzutage weit verbreitet als Strukturelemente für den Innen- und Außenbereich, was im Wesentlichen auf die hervorragenden mechanischen Eigenschaften zurückzuführen ist.

Eine Verbesserung der mechanischen Eigenschaften, wie Festigkeit und Steifheit, lässt sich insbesondere durch den Zusatz faserförmiger Verstärkungsstoffe, z.B. Glasfasern oder Carbonfasern, erreichen. In vielen Fällen werden neben den Glasfasern auch noch teilchenförmige Füllstoffe verwendet, sei es, um die Formmassen mittels anorganischer Pigmente einzufärben oder spezifische Eigenschaftsmodifizierungen vorzunehmen.

Die laserdirektstrukturierbaren Formmassen enthalten sogenannte Laseradditive, die bei Einwirkung von elektromagnetischen Strahlen Metalle freisetzen. Für diese laserinduzierte Bekeimung kommen häufig Metalloxide, insbesondere Spinelle zum Einsatz. Zur Erhöhung der Mikrorauhigkeit und damit der Haftung der später aufgetragenen Leiterbahn können solche Formmassen zusätzlich noch beträchtliche Mengen an weiteren Füllstoffen enthalten, wie z.B. Talk. Durch den Zusatz von partikulären Füllstoffen zu den glasfaserverstärkten Formmassen werden die mechanischen Eigenschaften aber in der Regel deutlich verschlechtert, insbesondere wird die Reissfestigkeit, die Reissdehnung sowie die Schlagzähigkeit reduziert. Dies hat zur Konsequenz, dass in Verbindung mit Standard-Glasfasern keine oder nur geringe Gehalte an partikulären Füllstoffen, eingesetzt werden können, wenn die Steifigkeit, die Reissfestigkeit sowie die Schlagzähigkeit als kritische Parameter für das Formteil angesehen werden.

Einerseits bewirkt der Zusatz der für MID-Formmassen erforderlichen partikulären Füllstoffe zu glasfaserverstärkten Formmassen die Funktionalität der Laserstrukturierbarkeit und der Leiterbahnhaftung, führt aber andererseits zu einer Verschlechterung hinsichtlich der mechanischen Eigenschaften, wie der Reissfestigkeit und der Zähigkeit. In diesem Spannungsfeld ist die vorliegende Erfindung zu sehen.

Konkret umfasst die Erfindung eine Formmasse mit hoher Steifigkeit, Reissfestigkeit und hoher Schlagzähigkeit nach Anspruch 1, insbesondere bestehend aus:
(A) 20 - 88 Gew.-% thermoplastischem Kunststoff. Dabei ist diese thermoplastische Komponente (A) bevorzugt aufgebaut aus Polyamid (A1) mit der Massgabe, dass bis zu 40%, vorzugsweise bis zu 20%, bis zu 10% oder bis zu 5% (jetzt jeweils bezogen auf den Gewichtsanteil der Gesamtkomponente (A) in der Formmasse), des Polyamids (A1) ersetzt sein können durch einen thermoplastischen Kunststoff (A2) nicht auf Polyamidbasis;
(B) 10 - 70 Gew.-% faserförmigen Zuschlagstoffen (Komponente (B)), aufgebaut aus (B1) 10 - 70 Gew.-% Glasfasern, ausgewählt aus der Gruppe bestehend aus:
   Glasfasern mit nicht-kreisförmigem Querschnitt (B1_1), wobei das Achsenverhältnis der Hauptquerschnittsachse zur Nebenquerschnittsachse wenigstens 2 ist;
   hochfeste Glasfasern (B1_2) mit einer Glaszusammensetzung, die im Wesentlichen aus den Komponenten Siliciumdioxid, Aluminiumoxid und Magnesiumoxid aufgebaut sind, welche bevorzugt einen Gehalt an Magnesiumoxid von wenigstens 5 Gew.-% und einen Gehalt an Calciumoxid von höchstens 10 Gew.-%, insbesondere bevorzugt von höchstens 5 Gew.-% aufweisen;
      oder Mischungen solcher Glasfasern des Typs B1_1 und B1_2;
   (B2) 0 - 20 Gew.-% andere, von den Glasfasern der Komponente (B1) verschiedene Glasfasern mit kreisförmigem Querschnitt;
   (B3) 0 - 20 Gew.-% weitere, von den Fasern der Komponenten (B1) und (B2) verschiedene faserförmige, nicht auf Glas basierende Zuschlagstoffe ausgewählt aus der Gruppe: Kohlenstoffasern, Graphitfasern, Aramidfasern, Nanotubes;
(C) 2 - 10 Gew.-% LDS-Additiv oder eine Mischung von LDS-Additiven;
(D) 0 - 30 Gew.-% partikulärer Füllstoff;
(E) 0 - 2 Gew.-% weitere andere Additive;
wobei die Summe aus (A) - (E) 100 Gew.-% ausmacht.

Bei den Glasfasern der Typen (B1_1) und (B1_2) kann es sich jeweils auch um Mischungen handeln mit unterschiedlichen Fasern, die aber alle die anspruchsgemässen Merkmale aufweisen, gleich wie es sich um eine Mischung aus den Fasern (B1_1) und (B1_2) handeln kann.

Vorzugsweise weisen die Fasern des Typs (B1_2) einen kreisförmigen Querschnitt auf. Die Komponente (A) ist dabei bevorzugtermassen ein thermoplastischer Kunststoff ausgewählt au der folgenden Gruppe: Polyamid, Polycarbonat, Polystyrol, Polymethylmethacrylat, Acrylnitril-Butadien-Styrol-Copolymerisat, Acrylnitril-Styrol-Copolymer, Polyolefin, Polyoxymethylen, Polyester, insbesondere Polyethylenterephthalat, Polybutylenterephthalat, Polysulfon (insbesondere des Typs PSU, PESU, PPSU), Polyphenylenether, Polyphenylensulfid, Polyphenylenoxid, flüssigkristalline Polymere, Polyetherketon, Polyetheretherketon, Polyimid, Polyamidimid, Polyesterimid, Polyetheramid, Polyesteramid, Polyetheresteramid, Polyurethan (insbesondere des Typs TPU, PUR), Polysiloxan, Polyacrylat, Polymethacrylat sowie Mischungen oder Copolymere auf Basis solcher Systeme. Solche Systeme können dabei weiterhin bevorzugt in Kombination mit den unten angegebenen und unter (A2) diskutierten Schlagzähmodifikatoren eingesetzt werden.

Bevorzugtermassen besteht dabei die Komponente (A) ganz aus Polyamid oder einer Mischung von verschiedenen Polyamiden.

Bevorzugtermassen liegt dabei der Anteil an Komponente (A) im Bereich von 25-82 Gew.-%, vorzugsweise im Bereich von 30-77 Gew.-%, wobei vorzugsweise auch der Gesamtanteil von (A) im Bereich von 25-82 Gew.-% liegt, insbesondere vorzugsweise im Bereich von 30-77 Gew.-%.

Der Anteil an Komponente (B1) liegt bevorzugtermassen im Bereich von 30-65 Gew.-%, vorzugsweise im Bereich von 35-60 Gew.-%, wobei weiterhin vorzugsweise die Anteile von (B2) und/oder (B3) null sind.

Wie erläutert besteht die Komponente (A) zur Hauptsache, das heisst bevorzugtermassen zu mehr als 60 % bezogen auf die Kunststoffmatrix, aus Polyamid. Mit anderen Worten ist bevorzugtermassen das Verhältnis von (A1) zu (A2) auf jeden Fall >1.5, vorzugsweise >2, insbesondere vorzugsweise >5.

Der andere thermoplastische Kunststoff (Komponente A2), der in Form einer Mischung mit dem Polyamidbestandteil (A1) ebenfalls vorhanden sein kann, ist vorzugsweise ausgewählt aus der Gruppe bestehend aus: Polycarbonat, Polystyrol, Polymethylmethacrylat, Acrylnitril-Butadien-Styrol-Copolymerisat, Acrylnitril-Styrol-Copolymer, Polyolefin, Polyoxymethylen, Polyester, insbesondere Polyethylenterephthalat, Polybutylenterephthalat, Polysulfon (insbesondere des Typs PSU, PESU, PPSU), Polyphenylenether, Polyphenylensulfid, Polyphenylenoxid, Flüssigkristalline Polymere, Polyetherketon, Polyetheretherketon, Polyimid, Polyamidimid, Polyesterimid, Polyetheramid, Polyesteramid, Polyetheresteramid, Polyurethan (insbesondere des Typs TPU, PUR), Polysiloxan, Polyacrylat, Polymethacrylat sowie Mischungen oder Copolymere auf Basis solcher Systeme.

Der Anteil dieser weiteren Matrix-Komponente (A2) liegt bevorzugtermassen im Bereich von 0-20 Gew.-%, vorzugsweise im Bereich von 0-10 Gew.-% oder im Bereich von 0-5 Gew.-%. Bevorzugtermassen gibt es aber keine weitere Matrix-Komponente (A2), d.h. bevorzugtermassen liegt in der Formmasse ausschliesslich Komponente (A1) vor.

In einer weiteren Ausführungsform enthält die erfindungsgemässe Formmasse als Komponente (A2) bis zu 40 Gew.-% eines oder mehrerer Schlagzähmodifikatoren (SZM). Bevorzugt wird eine SZM-Konzentration im Bereich zwischen 5 und 40 Gew.-%, insbesondere von 7-30 Gew.-%. Der Schlagzähmodifier kann ein Naturkautschuk, Polybutadien, Polyisopren, Polyisobutylen, ein Mischpolymerisat des Butadiens und/oder Isoprens mit Styrol oder Styrolderivaten und anderen Comonomeren, ein hydriertes Mischpolymerisat und oder ein Mischpolymerisat, das durch Pfropfen oder Copolymerisation mit Säureanhydriden, (Meth)acrylsäure und deren Ester entstanden ist, sein. Der Schlagzähmodifier (A2) kann auch ein Pfropfkautschuk mit einem vernetzten elastomeren Kern, der aus Butadien, Isopren oder Alkylacrylaten besteht und eine Pfropfhülle aus Polystyrol hat, ein unpolares oder polares Olefinhomo- und copolymeres wie Ethylen-Propylen-, Ethylen-Propylen-Dien- und Ethylen-Octen- oder Ethylen-Vinylacteat-Kautschuk oder ein unpolares oder polares Olefinhomo- und copolymeres, das durch Pfropfen oder Copolymerisation mit Säureanhydriden, (Meth)acrylsäure und deren Ester entstanden ist, sein. Der Schlagzähmodifier (A2) kann auch ein carbonsäurefunktionalisiertes Copolymeres wie Poly(ethen-co-(meth)acrylsäure) oder Poly(ethen-co-1-olefin-co-(meth)acrylsäure) sein, wobei das 1-Olefin ein Alken oder ein ungesättigter (Meth)acrylsäureester mit mehr als 4 Atomen sein kann, einschliesslich solchen Copolymeren, in denen die Säuregruppen teilweise mit Metallionen neutralisiert sind. Bevorzugte Schlagzähmodifikatoren der Komponente (A2) auf Basis von Styrolmonomeren (Styrol und Styrolderivate) und anderen vinylaromatischen Monomeren sind Blockcopolymere aufgebaut aus alkenylaromatischen Verbindungen und einem konjungierten Dien, sowie hydrierte Blockcopolymere aus einer alkenylaromatischen Verbindung und konjungierten Dienen oder Kombinationen dieser SZM-Typen. Das Blockcopolymer enthält mindestens einen Block abgeleitet von einer alkenylaromatischen Verbindung (A) und wenigstens einem Block abgeleitet von einem konjungierten Dien (B). Bei den hydrierten Blockcopolymeren wurde der Anteil an aliphatisch ungesättigten Kohlenstoff-Kohlenstoff-Doppelbindungen durch Hydrierung reduziert. Als Blockcopolymere sind Zwei-, Drei-, Vier- und Polyblockcopolymere mit linearer Struktur geeignet. Jedoch sind verzweigte und sternförmige Strukturen ebenfalls einsetzbar. Verzweigte Blockcopolymere erhält man in bekannter Weise, z.B. durch Pfropfreaktionen von polymeren "Seitenästen" auf eine Polymer-Hauptkette. Als alkenylaromatische Monomere können neben oder in Mischung mit Styrol, auch vinylaromatische Monomere verwendet werden, die am aromatischen Ring und/oder an der C=C-Doppelbindung mit C1-20-Kohlenwasserstoffresten oder Halogenatomen substituiert sind.

Beispiele für alkenylaromatische Monomere sind Styrol, p-Methylstyrol, α-Methylstyrol, Ethylstyrol, tert.-Butylstyrol, Vinyltoluol, 1,2-Diphenylethylen, 1,1-Diphenylethylen, Vinylxylole, Vinyltoluole, Vinylnaphthaline, Divinylbenzole, Bromstyrole, Chlorstyrole, sowie Kombinationen davon. Bevorzugt werden Styrol, p-Methylstyrol, alpha-Methylstyrol und Vinylnaphthalin.

Bevorzugt verwendet man Styrol, α-Methylstyrol, p-Methylstyrol, Ethylstyrol, tert.-Butylstyrol, Vinyltoluol, 1,2-Diphenylethylen, 1,1-Diphenylethylen oder deren Mischungen. Besonders bevorzugt wird Styrol eingesetzt. Es können aber auch Alkenylnaphthaline verwendet werden.

Als Dienmonomere kommen z.B. 1,3-Butadien, 2-Methyl-1,3-butadien, 2,3-Dimethyl-1,3-butadien, 1,3-Pentadien, 1,3-Hexadien, Isopren, Chloropren und Piperylen in Betracht. 1,3-Butadien und Isopren sind bevorzugt, insbesondere 1,3-Butadien (nachfolgend kurz als Butadien bezeichnet).

Bevorzugt verwendet man als alkenylaromatisches Monomer Styrol und als Dienmonomer Butadien, d.h. bevorzugt ist das Styrol-Butadien-Blockcopolymer. In der Regel werden die Blockcopolymere durch anionische Polymerisation in an sich bekannter Weise hergestellt. Weiterhin kann man zusätzlich zu den Styrol- und Dienmonomeren weitere Comonomere mitverwenden. Der Anteil der Comonomeren beträgt bevorzugt 0 bis 50, besonders bevorzugt 0 bis 30 und insbesondere 0 bis 15 Gew.-%, bezogen auf die Gesamtmenge der eingesetzten Monomeren. Geeignete Comonomere sind z.B. Acrylate, insbesondere C1-12-Alkylacrylate wie n-Butylacrylat oder 2-Ethylhexylacrylat, und die entsprechenden Methacrylate, insbesondere C1-12-Alkylmethacrylate wie Methylmethacrylat (MMA). Weitere mögliche Comonomere sind (Meth)acrylnitril, Glycidyl(meth)acrylat, Vinylmethylether, Diallyl- und Divinylether bifunktioneller Alkohole, Divinylbenzol und Vinylacetat.

Zusätzlich zum konjugierten Dien enthalten die hydrierten Blockcopolymere der Komponente (A2) gegebenenfalls noch Anteile an niederen Kohlenwasserstoffen wie z.B. Ethylen, Propylen, 1-Buten, Dicyclopentadien oder nicht-konjugierte Diene. In den hydrierten Blockcopolymeren ist der Anteil der nicht reduzierten aliphatischen ungesättigten Bindungen, die aus dem Block B resultieren, kleiner 50%, bevorzugt kleiner 25%, insbesondere kleiner 10%. Die aromatischen Anteile aus Block A werden maximal zu 25% reduziert. Die hydrierten Blockcopolymere Styrol-(ethylen-butylen)-Zweiblock und Styrol-(ethylen-butylen)-styrol-Dreiblock-Copolymere werden durch Hydrierung von Styrol-butadien- und Styrol-butadien-styrol-Copolymeren erhalten. Die Blockcopolymere bestehen bevorzugt zu 20 bis 90 Gew.-% aus Block A, insbesondere zu 50 bis 85 Gew.-% aus Block A. Das Dien kann in 1,2- oder in 1,4-Orientierungen in den Block B eingebaut werden.

Die Molmasse der Blockcopolymere der Komponente (A2) beträgt bevorzugtermassen 5'000 bis 500'000 g/mol, bevorzugt 20'000 bis 300'000 g/mol, insbesondere 40'000 bis 200'000 g/mol. Geeignete hydrierte Blockcopolymere sind die kommerziell erhältlichen Produkte, wie z.B. KRATON® (Kraton Polymers) G1650, G1651, und G1652 sowie TUFTEC® (Asahi Chemical) H1041, H1043, H1052, H1062, H1141 und H1272. Beispiele für nicht-hydrierte Blockcopolymere sind Polystyrol-polybutadien, Polystyrolpoly(ethyen-propylen), Polystyrol-polyisopren, Poly(α-methyl-styrol)-polybutadien, Polystyrene-polybutadien-polystyrol (SBS), Polystyrol-Poly(ethylene-propylen)-polystyrol, Polystyrol-polyisopren-polystyrol und Poly(α-methylstyrol-polybutadiene-poly(α-methylstyrol), als auch Kombinationen davon.

Geeignete nicht-hydrierte Blockcopolymere, die kommerziell erhältlich sind, sind verschiedene Produkte mit dem Markennamen SOLPRENE® (Phillips), KRATON® (Shell), VECTOR® (Dexco) und SEPTON® (Kuraray).

Gemäss einer weiteren bevorzugten Ausführungsform sind die erfindungsgemässen Formmassen dadurch gekennzeichnet, dass die Komponente (A2) ein Polyolefinhomopolymeres oder ein Ethylen-α-Olefin-Copolymeres, insbesondere bevorzugt ein EP- und/oder EPDM-Elastomer (Ethylen-Propylen-Kautschuk respektive Ethylen-Propylen-Dien-Kautschuk), enthält. So kann es sich beispielsweise um ein Elastomer handeln, welches basiert auf einem Ethylen-C3-12- α -Olefin-Copolymer mit 20 bis 96, bevorzugt 25 bis 85 Gew.-% Ethylen, wobei es sich insbesondere bevorzugt bei dem C3-12-α-Olefin um ein Olefin ausgewählt aus der Gruppe Propen, 1-Buten, 1-Penten, 1-Hexen, 1-Octen, 1-Decen und/oder 1-Dodecen handelt, und es sich insbesondere bevorzugt bei der Komponente C um Ethylen-Propylen-Kautschuk und/oder LLDPE und/oder VLDPE handelt.

Alternativ oder zusätzlich (beispielsweise in Mischung) kann (A2) ein Terpolymeres auf Basis von Ethylen-C3-12-α-Olefin mit einem unkonjugierten Dien enthalten, wobei dieses bevorzugtermassen 25 bis 85 Gew.-% Ethylen und bis maximal im Bereich von 10 Gew.-% eines unkonjugierten Diens enthält, wobei es sich insbesondere bevorzugt bei dem C3-12-α-Olefin um ein Olefin ausgewählt aus der Gruppe Propen, 1-Buten, 1-Penten, 1-Hexen, 1-Octen, 1-Decen und/oder 1-Dodecen handelt, und/oder wobei das unkonjugierte Dien bevorzugt ausgewählt ist aus der Gruppe Bicyclo(2.2.1) heptadien, Hexadien-1.4, Dicyclopentadien und/oder insbesondere 5-Ethylidennorbornen.

In Frage als Bestandteil für die Komponente (A2) kommen zudem auch Ethylen-AcrylatCopolymere. Weitere mögliche Formen als Bestandteile für die Komponente (A2) sind die Ethylen-Butylen-Copolymere beziehungsweise Mischungen (Blends), welche derartige Systeme enthalten.

Bevorzugtermassen verfügt die Komponente (A2) über Bestandteile mit Säureanhydridgruppen, die durch thermische oder radikalische Reaktion des Hauptkettenpolymers mit einem ungesättigten Dicarbonsäureanhydrid, einer ungesättigten Dicarbonsäure oder einem ungesättigten Dicarbonsäuremonoalkylester in einer Konzentration eingebracht werden, die für eine gute Anbindung an das Polyamid ausreicht, wobei dafür Reagenzien ausgewählt aus der folgenden Gruppe bevorzugtermassen eingesetzt werden: Maleinsäure, Maleinsäureanhydrid, Maleinsäuremonobutylester, Fumarsäure, Aconitsäure und/oder Itaconsäureanhydrid.

Vorzugsweise werden 0.1 bis 4.0 Gew.-% eines ungesättigten Anhydrids an die Schlagzähkomponente als Bestandteil von (A2) aufgepfropft oder das ungesättigte Dicarbonsäureanhydrid oder dessen Vorstufe wird zusammen mit einem weiteren ungesättigten Monomeren aufgepfropft. Generell ist der Pfropfgrad bevorzugtermassen in einem Bereich von 0.1-1.0%, insbesondere bevorzugt in einem Bereich von 0.3-0.7%. Auch möglich als Bestandteil der Komponente (A2) ist eine Mischung aus einem Ethylen-Propylen-Copolymer und einem Ethylen-Butylen-Copolymer, dies mit einem Maleinsäureanhydrid-Pfropfgrad (MAH-Propfgrad) im Bereich von 0.3-0.7%. Die oben angegebenen möglichen Systeme für die Komponente können auch in Mischungen verwendet werden.

Weiterhin kann die Komponente (A2) über Bestandteile verfügen, welche über funktionelle Gruppen, wie z.B. Carbonsäure-, Ester-, Epoxy-, Oxazolin-, Carbodiimid-, Isocyanat-, Silanol- und Carboxylat-Gruppen verfügen, oder Kombinationen von zwei oder mehrerer der genannten funktionellen Gruppen enthalten. Monomere, die diese funktionellen Gruppen tragen, können durch Co-Polymerisation oder Pfropfung an das elastomere Polyolefin gebunden werden. Ausserdem können die SZM auf Basis der Olefinpolymere auch durch Pfropfung mit einer ungesättigten Silanverbindung, z. B. Vinyltrimethoxysilan, Vinyltriethoxysilan, Vinyltriacetosilan, Methacryloxypropyltrimethoxysilan oder Propenyltrimethoxysilan modifiziert sein.

Die elastomeren Polyolefine sind statistische, alternierende oder segmentierte Copolymere mit linearer, verzweigter oder Core-Shell-Struktur und enthalten funktionelle Gruppen, die mit den Endgruppen der Polyamide reagieren können, so dass eine ausreichende Verträglichkeit zwischen Polyamid und SZM resultiert.

Die als Komponente (A2) eingesetzten SZM schliessen damit Homopolymere oder Copolymere von Olefinen, wie z.B. Ethylen, Propylen, Buten-1, oder Copolymere von Olefinen und copolymerisierbaren Monomeren, wie Vinylacetat, (Meth)acrylsäureester und Methylhexadien, ein.

Beispiele für kristalline Olefinpolymere sind niedrig-, mittel- und hochdichte Polyethylene, Polypropylen, Polybutadien, Poly-4-methylpenten, Ethylen-Propylen-Block- oder statistische Copolymere, Ethylen-Methylhexadien-Copolymere, Propylen-Methylhexadien-Copolymere, Ethylen-Propylen-Buten-Copolymere, Ethylen-Propylen-Hexen-Copolymere, Ethylen-Propylen-Methylhexadien-Copolymere, Poly(ethylen-vinylacetat) (EVA), Poly(ethylen-ethylacrylat) (EEA), Ethylen-Octen-Copolymer, Ethylen-Buten-Copolymer, Ethylen-Hexen-Copolymer, Ethylen-Propylen-Dien-Terpolymere sowie Kombinationen der genannten Polymere.

Beispiele für kommerziell erhältliche Schlagzähmodifier, welche im Rahmen der Bestandteile der Komponente (A2) eingesetzt werden können, sind: TAFMER MC201: g-MAH (-0.6 %) Blend aus 67% EP Copolymer (20 Mol-% Propylen) + 33 % EB Copolymer (15mol-% Buten-1)); TAFMER MH5010: g-MAH (-0.6 %) Ethylen-Butylen-Copolymer; TAFMER MH7010: g-MAH (-0.7 %) Ethylen-Butylen-Copolymer; Mitsui. TAFMER MH7020: g-MAH (-0.7 %) EP-Copolymer von Mitsui Chemicals; EXXELOR VA1801: g-MAH (-0.7 %) EP-Copolymer;.EXXELOR VA1803: g-MAH (0.5-0.9 %) EP Copolymer, amorph; EXXELOR VA1810: g-MAH (-0.5 %) EP-Copolymer; EXXELOR MDEX 94-1 1: g-MAH (0.7 %) EPDM, Exxon Mobile Chemical; FUSABOND MN493D: g-MAH (-0.5 %) Ethylen-Octen-Copolymer; FUSABOND A EB560D (g-MAH) Ethylenn-butyl-acrylat-copolymer; ELVALOY, DuPont.

Bevorzugt wird auch ein Ionomer im Rahmen von Komponente (A2), in welchem die polymergebundenen Carboxylgruppen ganz oder teilweise durch Metallionen miteinander verbunden sind.

Besonders bevorzugt sind durch Pfropfen mit Maleinsäureanhydrid funktionalisierte Mischpolymerisate des Butadiens mit Styrol, unpolare oder polare Olefinhomo- und Copolymere, die durch Pfropfen mit Maleinsäureanhydrid entstanden sind und carbonsäurefunktionalisierte Copolymere wie Poly(ethen-co-(meth)arylsäure) oder Poly(ethen-co-1-olefin-co-(meth)acrylsäure), in denen die Säuregruppen teilweise mit Metallionen neutralisiert sind.

Die Formasse besteht bevorzugt aus 20 bis 88 Gew.-% aus Polyamid (A1), welches aus aliphatischen, cycloaliphatischen oder aromatischen Monomeren aufgebaut sein kann. Insbesondere enthalten die erfindungsgemässen Formmassen teilkristalline, aliphatische Polyamide, teilkristalline oder amorphe, teilaromatische Polyamide und teilkristalline oder amorphe Polyamide z.B. auf Basis cycloaliphatischer Diamine.

Die erfindungsgemäß eingesetzte Matrix der Polyamidformmassen basiert, wie oben beschrieben wurde, weiterhin bevorzugtermassen auf mindestens einem teilkristallinen, aliphatischen (Komponente A1_1) und/oder teilaromatischen (Komponente A1_2) Polyamid, und/oder auf mindestens einem amorphen Polyamid (Komponente A1_3) auf Basis von cycloaliphatischen Diaminen oder auf einer Mischung der Komponenten A1_1 und A1_2, A1_1 und A1_3 oder einer Mischung des Typs A1_1, A1_2 und A1_3.

Die genannten Polyamide können aus folgenden Dicarbonsäuren hergestellt werden: Adipinsäure, Korksäure, Azelainsäure, Sebacinsäure, Undecandisäure, Dodecandisäure, Tridecandisäure, Tetradecandisäure, Pentadecandisäure, Hexadecandisäure, Heptadecandisäure, Oktadecandisäure, C36-Dimerfettsäure, Isophthalsäure, Terephthalsäure, Naphthalindicarbonsäure, cis- und/oder trans-Cyclohexan-1,4-dicarbonsäure und/oder cis- und/oder trans-Cyolohexan-1,3-dicarbonsäure (CHDA) und Gemischen daraus.

Als Diamine kommen folgende Monomere in Frage: 1,4-Butandiamin, 1,5-Pentandiamin, 2-Methyl-1,5-pentandiamin, 2-Butyl-2-ethyl-1,5-pentandiamin, 1,6-Hexandiamin, 2,2,4-Trimethylhexamethylendiamin, 2,4,4-Trimethylhexamethylendiamin, 1,8-Octandiamin, 2-Methyl-1,8-octandiamin, 1,9-Nonandiamin, 1,10-Decandiamin, 1,11-Undecandiamin, 1,12-Dodecandiamin, 1,13-Tridecandiamin, 1,14-Tetradecandiamin, m-Xylylendiamin und p- Xylylendiamin.

Weiterhin können die Polyamide auch auf Lactamen oder Aminocarbonsäuren, insbesondere α,ωAminosäuren oder Lactame mit 6 bis 12 Kohlenstoffatome aufgebaut sein, wobei beispielhaft nachfolgende Auswahl genannt sei: m-Aminobenzoesäure, p-Aminobenzoe-säure Caprolactam (CL), ω-Aminocapronsäure, ω-Aminoheptansäure, ω-Aminoctan-säure, ω-Aminononansäure, ω-Aminodecansäure, ω-Aminoundecansäure (AUA), Laurinlactam (LL) und ω-Aminododecansäure (ADA). Besonderes bevorzugt sind Caprolactam, Aminocapronsäure, Laurinlactam und Aminododecansäure.

Geeignete cycloaliphatische Diamine sind solche mit 6 bis 24 Kohlenstoffatomen, wie z.B. Bis-(4-amino-3-methyl-cyclohexyl)-methan (MACM), Bis-(4-amino-cyclohexyl)-methan (PACM), Bis-(4-Amino-3-ethyl-cyclohexyl)-methan (EACM), Bis-(4-Amino-3,5-dimethyl-cyclohexyl)-methan (TMACM), 2,6-Norbornandiamin oder 2,6-Bis-(aminomethyl)-norboman oder 1,3-Cyclohexyldiamin, 1,4-Cyclohexyldiamin, Bis-(1,3-aminomethyl)cyclohexan, Isophorondiamin, Cyclohexandiamin, 1,3-Bis-(aminomethyl)cyclohexan, 1,4-Bis-(aminomethyl)cyclohexan, Isophorondiamin, Norbornandimethylamin, 2,2-(4,4'-Diaminodicyclohexyl)propan (PACP) oder Mischungen davon. Insbesondere wird alkylsubstituiertes Bis-(aminocyclohexyl)methan oder Bis-(aminocyclohexyl)propan bevorzugt. Als Alkylsubstituenten werden lineare und/oder verzweigte C1-C6, bevorzugt C1-C4 Alkylgruppen bevorzugt, so insbesondere Methyl-, Ethyl-, Propyl-, Isopropyl- oder Butyl-Gruppen bevorzugt, insbesondere bevorzugt Methylgruppen. In einer besonders bevorzugten Ausführungsform wird als alkylsubstituiertes Bis-(aminocyclohexyl)methan das Bis-(4-amino-3-methyl-cyclohexyl)-methan (MACM) eingsetzt.

Die Polyamide A1_1, A1_2 oder A1_3 haben vorzugsweise eine Lösungsviskosität ηᵣₑₗ, gemessen in m-Kresol (0,5 Gew.-%, 20°C) im Bereich von 1,4 bis 3.0, bevorzugt im Bereich von 1,5 bis 2.7, insbesondere im Bereich von 1,5 bis 2.4.

Als aliphatische Polyamide werden bevorzugt Polyamid 46, Polyamid 6, Polyamid 66, Polyamid 11, Polyamid 12, Polyamid 1212, Polyamid 1010, Polyamid 1012, Polyamid 1112, Polyamid 610, Polyamid 612, Polyamid 69, Polyamid 810 oder deren Gemische, Blends oder Legierungen.

Bevorzugte amorphe oder teilkristalline Polyamide auf Basis von cycloaliphatischen Diaminen sind vorzugsweise MACM9, MACM10, MACM11, MACM12, MACM13, MACM14, MACM16, MACM18, PACM9, PACM10, PACM11, PACM12, PACM13, PACM14, PACM16, PACM18 oder Copolyamide, wie z.B. MACMI/12, MACMT/12, 6I/6T/MACMI/MACMT/12, 3-6T, 6I/MACMI/MACMT, 6I/PACMI/PACMT, 6I/6T/MACMI, MACMI/MACM36, 12/PACMI oder 12/MACMT, 6/PACMT, 6/IPDT oder Mischungen daraus MACM10/PACM10 und MACM12/PACM12, und Mischungen davon.

Teilaromatische Polyamide beruhen vorzugsweise entweder auf aromatischen Dicarbonsäuren mit 8 bis 18, bevorzugt 8 bis 14 Kohlenstoffatomen oder auf aromatische Struktureinheiten aufweisende Diamine, wie z.B. PXDA und/oder MXDA. Bevorzugte aromatische Dicarbonsäuren sind TPS, Naphthalindicarbonsäure und IPS. Bevorzugte teilaromatische Polyamide beruhen auf den folgenden Polyamidsystemen: 4T, 5T, DT, 6T, 9T, MT, 10T, 12T, 4I, 51, DI, 6I, 9I, MI, 10I, 12I. Diese können, sofern es die Verarbeitungstemperatur zulässt, als Homopolyamide sowie als binäre, ternäre oder quaternäre Coolyamide miteinander kombiniert werden. Des Weiteren können auch aliphatische Polyamidsysteme, wie z.B. PA46, PA6, PA66, PA11, PA12, PA1212, PA1010, PA1012, PA610, PA612, PA69, PA810 hinzukombiniert werden.

Bevorzugte teilaromatische Polyamide sind: MXD6, MXD10, MXDI/MXD6, 6T/6I, 6T/66, 6T/10T, 6T/12, 11/10T, 12/10T, 10T/1010, 10I/10T, 10T/1012, 9MT (M steht für 2-Methyloctandiamin), 12T.

Bei den Polyamiden A2 sind die Copolyamide 6T/6I, 10I/10T, MXD6/MXDI sowie die Homopolyamide MACM12 und MXD6 bevorzugt. Hinsichtlich der Copolyamide 6T/6I sind zwei verschiedene Zusammensetzungsbereiche besonders bevorzugt. Zum einen sind dies die amorphen Copolyamide mit einem Anteil von weniger als 50 Mol-% 6T-Einheiten, wobei ein Zusammensetzungsbereich 6T:6I von 20:80 bis 45:55 bevorzugt wird, und zum anderen sind dies die hochschmelzenden Copolymamide mit einem 6T-Anteil von grösser als 50 mol-%, wobei ein Zusammensetzungsbereich 6T:6I von 55:45 bis 80:20, insbesondere von 65:35 bis 75:25 bevorzugt wird. Im Hinblick auf die Copolyamide MXD6/MXDI werden MXD6 reiche Zusammensetzungen bevorzugt, insbesondere mit einem MXD6-Gehalt von grösser als 80 mol-%, besonders bevorzugt im Bereich von 82 bis 95 mol-%.

Bezüglich einer Polymermischung enthaltend die Polyamidkomponenten A1_1 und A1_2, A1_1 und A1_3, A1_2 und A1_3 sowie A1_1, A1_2 und A1_3 werden folgende Zusammensetzungen bevorzugt:
- (A1_1):: PA 66
- (A1_2):: PA 6I/6T, wobei das Mol-Verhältnis im Bereich von 65:35 bis 75:25 liegt oder insbesondere 67:33 beträgt.
- (A1_1):: PA 610 und/oder PA1010, wobei im Falle einer Mischung die Komponenten im Verhältnis von 1:1 bis 4:1 eingesetzt werden.
- (A1_2):: PA 6I/6T, wobei das Mol-Verhältnis im Bereich von 65:35 bis 75:25 liegt oder insbesondere 67:33 beträgt.
- (A1_1):: Mischung aus PA 6 und PA66, im Verhältnis von 1:2 bis 1:4, insbesondere von 1:4
- (A1_2):: PA 6I/6T, wobei das Mol-Verhältnis im Bereich von 65:35 bis 75:25 liegt oder insbesondere 67:33 beträgt.
- (A1_1):: PA 66
- (A1_2):: PA 6T/6I, wobei das Mol-Verhältnis im Bereich von 60:40 bis 75:25 liegt oder insbesondere 70:30 beträgt.
- (A1_1):: PA 66
- (A1_2):: PA 6T/66, wobei das Mol-Verhältnis im Bereich von 50:50 bis 70:30 liegt oder insbesondere 55:45 beträgt.
- (A1_1):: PA 66
- (A1_2):: MXD6, MXD10 oder PA MXD6/MXDI, wobei im Copolyamid das Mol-Verhältnis im Bereich von 70:30 bis 90:10 liegt oder insbesondere 88:12 beträgt.
- (A1_1):: PA 12
- (A1_3):: PAMACM12.
- (A1_1):: PA 12
- (A1_3):: PA MACMI/12, wobei der Gehalt an Laurinlactam im Bereich von 15 bis 45 mol%, bevorzugt kleiner als 40 mol-%, insbesondere im Bereich von 20 bis 35 mol-% liegt.

Dabei liegt bevorzugtermassen der Anteil der Komponente (A1_1) jeweils im Bereich von 50 bis 90 Gew.-%, insbesondere von 60 bis 85 Gew.-% und Komponente (A1_2) und/oder (A1_3) bevorzugt im Bereich von 10 bis 50 Gew.-%, insbesondere im Bereich von 15 bis 40 Gew.-%.

In einer besonderen Ausführungsform werden folgende Zusammensetzungen für die Polymermischung (Polyamidmatrix) bevorzugt:
- (A1_1):: 50-100 Gew.-% PA 1010 oder PA 1012 oder PA 11 oder PA 12
- (A1_3):: 0-50 Gew.-% PA MACM12 oder PA MACMI/12 oder PA PACM12/MACM12,
- (A1_1):: 55-85 Gew.-% PA 610 oder PA 612 oder PA 1010 oder PA 1012 oder PA 1210 oder PA1212
- (A1_3):: 15-45 Gew.-% PA 6T/6I oder PA 10T/10I, wobei der 6I- bzw. 10I-Anteil 55 - 80 (bevorzugt 60-75) mol% beträgt.
- (A1_1):: 70-100 Gew.-% Mischung aus PA 6 und PA66, im Verhältnis von 1:2 bis 1:4, insbesondere von 1:4
- (A1_2):: 0-30 Gew.-% PA 6I/6T, wobei das Mol-Verhältnis im Bereich von 65:35 bis 75:25 liegt oder insbesondere 67:33 beträgt,

In einer weiteren Ausführungsform weist die Komponente A1_2 eine Glasübergangstemperatur von grösser 90°C, bevorzugt grösser 110°C und besonders bevorzugt grösser 140°C auf.

Insbesondere bevorzugt ist folgende Ausführungsform:
(A1_1): 55-85 Gew.-% PA 610 oder PA 612oder PA 1010 oder PA 1012 oder PA 1210 oder PA1212
(A1_3): 15-45 Gew.-% PA 6T/6I oder PA 10T/10I, wobei der 6I- bzw. 10I-Anteil 55 - 80 (bevorzugt 60-75) mol% beträgt.

Bevorzugt können auch teilaromatische, teilkristalline Polyamid-Systeme als Komponente (A1) eingesetzt werden.

Weiterhin bevorzugt geht es um Formmassen, die fürs Reflow-Löten geeignet sind, also kurzzeitige Temperaturbelastungen von 260-270°C ohne Verzug und Blistering überstehen können.

Gemäss einer bevorzugten Ausführungsform ist die Komponente (A1), die dann bevorzugt die Gesamtheit von (A) ausmacht, aufgebaut aus PA 10T/6TCopolyamid, wobei dieses aufgebaut ist aus:
(AA) 40 bis 95 Mol-%, bevorzugt 60 bis 95 Mol-% 10T-Einheiten, gebildet aus den Monomeren 1,10-Decandiamin und Terephthalsäure;
(BB) 5 bis 60 Mol-%, bevorzugt 5 bis 40 Mol-% 6T-Einheiten, gebildet aus den Monomeren 1,6-Hexandiamin und Terephthalsäure.

Dabei können bis zu 30% der Monomeren innerhalb der so aufgebauten Komponente (A1) ersetzt werden, das heisst, das obige gilt einerseits mit der Massgabe, dass in der Komponente (A1) unabhängig voneinander in (AA) und/oder (BB) bis zu 30 Mol-%, bezogen auf die Gesamtmenge der Dicarbonsäuren, der Terephthalsäure ersetzt sein können durch andere aromatische, aliphatische oder cycloaliphatische Dicarbonsäuren mit 6 bis 36 Kohlenstoffatomen. Des weiteren gilt das obige andererseits mit der Massgabe, dass in der Komponente (A1) unabhängig voneinander in (AA) und/oder (BB) bis zu 30 Mol-% von 1,10-Decandiamin respektive 1,6-Hexandiamin, bezogen auf die Gesamtmenge der Diamine, ersetzt sein können durch andere Diamine mit 4 bis 36 Kohlenstoffatomen. Zu guter letzt gilt das obige weiter mit der Massgabe, dass nicht mehr als 30 Mol-% in der Komponente (A1), bezogen auf die Gesamtmenge der Monomeren, durch Lactame oder Aminosäuren gebildet sein können. Es ist aber bevorzugt, wenn diese Ersetzung der Monomeren innerhalb der Komponente (A1) entsprechend den obigen Massgaben weniger als 20% ausmacht, bevorzugt weniger als 10%, und insbesondere bevorzugt findet überhaupt keine derartige Ersetzung Anwendung. Insgesamt gilt also als weitere Massgabe, dass die Summe der Monomere, die Terephthalsäure, 1,6-Hexandiamin und 1,10-Decandiamin ersetzen (d.h. der Gesamt-Anteil an anderen aromatischen, aliphatischen oder cycloaliphatischen Dicarbonsäuren mit 6 bis 36 Kohlenstoffatomen, an anderen Diaminen mit 4 bis 36 Kohlenstoffatomen, und an Lactamen oder Aminosäuren) eine Konzentration von 30 Mol-%, bevorzugt 20 Mol-%, insbesondere 10 Mol-% in Bezug auf die Gesamtmenge der in Komponente A eingesetzten Monomere nicht überschreitet.

Gemäss einer bevorzugten Ausführungsform ist die Komponente (A1), die dann bevorzugt die Gesamtheit von (A) ausmacht, aufgebaut aus Polyamid 10T/10I/6T/6I, namentlich einem teilaromatischen, teilkristallinen Copolyamids aufgebaut aus 100 Gew.-% Disäureanteil zusammengesetzt aus:
72.0-98.3 Gew.-% Terephthalsäure (TPS);
28.0-1.7 Gew.-% Isophthalsäure (IPS)
und 100 Gew.-% Diaminanteil zusammengesetzt aus:
51.0-80.0 Gew.-% 1,6-Hexandiamin (HMDA);
20.0-49.0 Gew.-% C9-C12 Diamin;
wobei es sich beim C9-C12 Diamin um ein Diamin ausgewählt aus der Gruppe: 1,9-Nonandiamin, Methyl-1,8-Octandiamin, 1,10-Decandiamin, 1,11-Undecandiamin, 1,12-Dodecandiamin, oder eine Mischung derartiger Diaminen handelt, wobei 1,10-Decandiamin und 1,12-Dodecandiamin bevorzugt sind, und besonders 1,10-Decandiamin allein bevorzugt ist. Damit ist also ein Polyamidsystem PA 10T/10I/6T/6I bevorzugt, wobei obige Konzentrationen gelten.

Gemäss einer bevorzugten Ausführungsform ist die Komponente (A1), die dann bevorzugt die Gesamtheit von (A) ausmacht, aufgebaut aus Polyamid PA 6T/6I/6, namentlich einem teilaromatischen, teilkristallinen Copolyamid aufgebaut aus Terephthalsäure (TPS), Isophthalsäure (IPS), 1,6-Hexandiamin (HMDA) und Caprolactam (CLM) bzw. Aminocapronsäure, wobei das Copolymid 6T/6I/6 die Zusammensetzung 60-80/15-25/5-15 Gew.-%, besonders bevorzugt 65-75/17.5-22.5/7.5-12.5 Gew.-% besitzt. Zusammenfassend lässt sich festhalten, dass es sich bevorzugtermassen bei der Komponente (A1) um ein Homo-Polyamid und/oder Copolyamid aufgebaut aus aliphatischen, cycloaliphatischen und/oder oder aromatischen Monomeren handelt, bevorzugt um eine Mischung aus einem teilkristallinen, aliphatischen Polyamid (A1_1) und/oder einem teilaromatischen Polyamid (A1_2), und/oder einem amorphen Polyamid (A1_3), wobei bevorzugtermassen die Polyamide der Komponente (A1) ausgewählt sind aus folgender Gruppe: Polyamid 46, Polyamid 6, Polyamid 66, Polyamid 11, Polyamid 12, Polyamid 1212, Polyamid 1010, Polyamid 1012, Polyamid 1112, Polyamid 610, Polyamid 612, Polyamid 69, Polyamid 810, MACM9, MACM10, MACM11, MACM12, MACM13, MACM14, MACM16, MACM18, PACM9, PACM10, PACM11, PACM12, PACM13, PACM14, PACM16, PACM18 oder Copolyamide, wie z.B. MACMI/12, MACMT/12, 6I/6T/MACMI/MACMT/12, 3-6T, 6I/MACMI/MACMT, 6I/PACMI/PACMT, 6I/6T/MACMI, MACMI/MACM36, 12/PACMI, 12/MACMT, 6/PACMT, 6/IPDT, MACM10/PACM10, MACM12/PACM12, MXD6, MXD10, MXDI/MXD6, 6T/6I, 6T/66, 6T/10T, 6T/12, 11/10T, 12/10T, 10T/1010, 10I/10T, 10T/1012, PA10T/6T, PA6T/10I/10T, PA6T/6I/6, 9MT (M steht für 2-Methyloctandiamin), 12T, sowie Mischungen respektive Blends davon.

Des weiteren enthalten die Formmassen 10 bis 70 Gew.-% Glasfasern (B1), ausgewählt aus der Gruppe bestehend aus
(B1_1) Glasfasern, bevorzugt aus E-Glas, mit nicht-kreisförmigem Querschnitt (flache Fasern) und mit einem Achsenverhältnis der Hauptquerschnittsachse zur Nebenquerschnittsachse von wenigstens 2, und/oder
(B1_2) hochfeste Glasfasern mit kreisförmigem oder nicht-kreisförmigem Querschnitt und einer Glaszusammensetzung, beruhend im Wesentlichen auf den Komponenten Siliciumdioxid, Aluminiumoxid und Magnesiumoxid,
die z.B. in Form von sogenannten Kurzfasern (z.B. Schnittglas mit einer Länge von 0.2-20 mm) oder Endlosfasern (Rovings) verwendet werden.

Als Glasfasern (B1_1) mit nicht-kreisförmigem Querschnitt werden bevorzugt E-Glasfasern gemäss ASTM D578-00 ausgewählt, vorzugsweise aus 52-62% Siliciumdioxid, 12-16% Aluminiumoxid, 16-25% Calciumoxid, 0-10% Borax, 0-5% Magnesiumoxid, 0-2% Alkalioxide, 0-1.5% Titandioxid und 0-0.3% Eisenoxid.

Die eingesetzte hochfeste Glasfaser (B1_2) beruht auf dem ternären System Siliciumdioxid-Aluminiumoxid-Magnesiumoxid oder auf dem quaternären System Siliciumdioxid-Aluminiumoxid-Magnesiumoxid-Calciumoxid, wobei die Summe der Gehalte von Siliciumdioxid, Aluminiumoxid und Magnesiumoxid wenigstens 78 Gew.-%, bevorzugt wenigstens 87% und besonders bevorzugt wenigstens 92% bezogen auf die gesamte Glaszusammensetzung beträgt.

Konkret wird bevorzugt eine Zusammensetzung von 58-70 Gew.-% Siliciumdioxid (SiO₂), 15-30 Gew.-% Aluminiumoxid (Al₂O₃), 5-15 Gew.-% Magnesiumoxid (MgO), 0-10 Gew.-% Calciumoxid (CaO) und 0-2 Gew.-% weitere Oxide, wie z.B. Zirkoniumdioxid (ZrO₂), Boroxid (B₂O₃), Titandioxid (TiO₂) oder Lithiumoxid (Li₂O) eingesetzt.

In einer weiteren Ausführungsform besitzt die hochfeste Glasfaser eine Zusammensetzung von 60-67 Gew.-% Siliciumdioxid (SiO₂), 20-28 Gew.-% Aluminiumoxid (Al₂O₃), 7-12 Gew.-% Magnesiumoxid (MgO), 0-9 Gew.-% Calciumoxid (CaO) sowie 0-1.5 Gew.-% weitere Oxide, wie z.B. Zirkoniumdioxid (ZrO₂), Boroxid (B₂O₃), Titandioxid (TiO₂), Lithiumoxid (Li₂O).

Insbesondere ist bevorzugt, wenn die hochfeste Glasfaser die nachfolgende Zusammensetzung aufweist: 62-66 Gew.-% Siliciumdioxid (SiO₂), 22-27 Gew.-% Aluminiumoxid (Al₂O₃), 8-12 Gew.-% Magnesiumoxid (MgO), 0- 5Gew.-% Calciumoxid (CaO), 0-1 Gew.-% weitere Oxide, wie z.B. Zirkoniumdioxid (ZrO₂), Boroxid (B₂O₃), Titandioxid (TiO₂), Lithiumoxid (Li₂O).

Die hochfeste Glasfaser besitzt eine Zugfestigkeit von grösser oder gleich 3700 MPa, vorzugsweise von wenigstens 3800 oder 4000 MPa, eine Reissdehnung von mindestens 4.8%, vorzugsweise von wenigstens 4.9 oder 5.0 %, und einen Zug-E-Modul von grösser 75 GPa, vorzugsweise von mehr als 78 oder 80 GPa, wobei diese Glaseigenschaften an Einzelfasem (pristine single filament) mit einem Durchmesser von 10 µm und eine Länge von 12.7 mm bei einer Temperatur von 23°C und einer relativen Luftfeuchte von 50% zu bestimmen sind.

Konkrete Beispiele für diese hochfesten Glasfasern der Komponente (B1) sind S-Glasfasern von Owens Corning mit 995-Schlichte, T-Glasfasern von Nittobo, HiPertex von 3B, HS4-Glasfasern von Sinoma Jinjing Fiberglass, R-Glasfaern von Vetrotex sowie S-1- und S-2-Glasfasern von AGY.

Die hochfesten Glasfasern (B1_2) haben bevorzugt eine kreisförmige oder nichtkreisförmige Querschnittsfläche. Die Glasfasern (B1_1) haben stets einen nicht-kreisförmigen Querschnitt, während die Glasfasern (B2) stets einen kreisförmigen Querschnitt aufweisen. Der faserförmige Zuschlagsstoff (B3) kann einen kreisförmigen oder einen nicht-kreisförmigen Querschnitt aufweisen.

Glasfasern mit kreisförmigem Querschnitt, also runde Glasfasern, haben einen Durchmesser im Bereich von 5-20 µm, bevorzugt im Bereich von 6-17 µm und besonders bevorzugt im Bereich von 6-13 µm. Sie werden bevorzugt als Kurzglasfaser (Schnittglas mit einer Länge von 0.2 bis 20 mm, bevorzugt 2-12 mm) eingesetzt.

Bei den flachen Glasfasern, also Glasfasern mit nicht-kreisförmiger Querschnittsfläche, werden solche mit einem Abmessungsverhältnis von der Hauptquerschnittsachse zur senkrecht daraufstehender Nebenquerschnittsachse von mehr als 2 bevorzugt von 2 bis 8, insbesondere von 2 bis 5 bevorzugt eingesetzt. Diese sogenannten flachen Glasfasern weisen eine ovale, elliptische, mit Einschnürung(en) versehene elliptische (sogenannte Kokon- oder cocoon-Faser), polygonale, rechteckige oder nahezu rechteckige Querschnittsfläche auf. Ein weiteres kennzeichnendes Merkmal der eingesetzten flachen Glasfasern besteht darin, dass die Länge der Hauptquerschnittsachse bevorzugt im Bereich von 6 bis 40 µm, insbesondere im Bereich von 15 bis 30 µm und die Länge der Nebenquerschnittsachse im Bereich von 3 bis 20 µm, insbesondere im Bereich von 4 bis 10 µm liegt. Dabei weisen die flachen Glasfasern eine möglichst hohe Packungsdichte auf, d.h. die Glasquerschnittsfläche füllt ein gedachtes, den Glasfaserquerschnitt möglichst exakt umgebenden Rechtecks zu mindestens 70%, bevorzugt mindestens 80% und insbesondere bevorzugt zu mindestens 85% aus.

Zur Verstärkung der erfindungsgemässen Formmassen können auch Mischungen von Glasfasern mit kreisförmigem und nicht-kreisförmigem Querschnitt verwendet werden, wobei der Anteil an flachen Glasfasern bevorzugtermassen überwiegt, d.h. mehr als 50 Gew.-% der Gesamtmasse der Fasern ausmacht.

Die erfindungsgemässen Glasfasern können mit einer für Thermoplaste, insbesondere für Polyamid geeigneten Schlichte, enthaltend einen Haftvermittler auf Basis einer Amino- oder Epoxysilanverbindung, versehen sein.

Die erfindungsgemäss z.B. als Roving eingesetzten hochfesten Glasfasern weisen einen Durchmesser von 8 bis 20 µm, bevorzugt von 12 bis 18 µm auf, wobei der Querschnitt der Glasfasern rund, oval, elliptisch, elliptisch mit Einschnürung(en) versehen, polygonal, rechteckig oder nahezu rechteckig sein kann. Besonders bevorzugt werden sogenannte flache Glasfasern mit einem Verhältnis der Querschnittsachsen von 2 bis 5. Diese Endlosfasern werden in die erfindungsgemässen Polyamidformmassen durch bekannte Verfahren zur Herstellung von langfaserverstärktem Stäbchengranulat eingearbeitet, insbesondere durch Pultrusionsverfahren, bei denen der endlose Faserstrang (Roving) mit der Polymerschmelze vollständig durchtränkt und anschliessend abgekühlt und geschnitten wird. Das auf diese Art und Weise erhaltene langfaserverstärkte Stäbchengranulat, das bevorzugt eine Granulatlänge von 3 bis 25 mm, insbesondere von 4 bis 12 mm aufweist, kann mit den üblichen Verarbeitungsverfahren (wie z. B. Spritzgiessen, Pressen) zu Formteilen weiterverarbeitet werden.

Die Faserkonzentration (Komponente (B) als ganzes), aber insbesondere auch die Glasfaserkonzentration (Summe der Komponenten (B1) und (B2), und ganz besonders bevorzugt die Konzentration der Komponente (B1) allein in den erfindungsgemäßen Formmassen liegt bevorzugt zwischen 30 und 60 Gew.-% und besonders bevorzugt zwischen 35 und 55 Gew.-%.

Die flachen Glasfasern der Komponente (B1_1) sind dabei z.B. bevorzugt als E-Glasfasern gemäss ASTM D578-00 mit nicht-kreisförmigem Querschnitt ausgewählt, vorzugsweise aus 52-62% Siliciumdioxid, 12-16% Aluminiumoxid, 16-25% Calciumoxid, 0-10% Borax, 0-5% Magnesiumoxid, 0-2% Alkalioxide, 0-1.5% Titandioxid und 0-0.3% Eisenoxid.

Die Glasfasern der Komponente (B1_1) weisen bevorzugt als flache E-Glasfasern eine Dichte von 2.54 - 2.62 g/cm³, einen Zug-E-Modul von 70 - 75 GPa, eine Zugfestigkeit von 3000 - 3500 MPa und eine Reissdehnung von 4.5 - 4.8% auf, wobei die mechanischen Eigenschaften an Einzelfasern mit einem Durchmesser von 10 µm und eine Länge von 12.7 mm bei 23°C und einer relativen Luftfeuchte von 50% bestimmt wurden.

Der Anteil an Komponente (B2), vorzugsweise ausgewählt aus der Gruppe bestehend aus runden E-Glasfasern, A-Glasfasern, C-Glasfasern, D-Glasfasern, Basaltfasern sowie Mischungen davon, jeweils mit kreisförmiger oder nicht-kreisförmiger Querschnittsfläche, liegt vorzugsweise im Bereich von 0-10 Gew.-%, vorzugsweise im Bereich von 0-5 Gew.-%, wobei insbesondere vorzugsweise ausschliesslich Komponente (B1) vorhanden ist. Vorzugsweise ist die Komponente (B2) ausgewählt aus der Gruppe bestehend aus: E-Glasfasern (diese bestehen gemäss ASTM D578-00 aus 52-62% Siliciumdioxid, 12-16% Aluminiumoxid, 16-25% Calciumoxid, 0-10% Borax, 0-5% Magnesiumoxid, 0-2% Alkalioxide, 0-1.5% Titandioxid und 0-0.3% Eisenoxid; bevorzugt haben sie eine Dichte von 2.58±0.04 g/cm3, einen Zug-E-Modul von 70-75 GPa, eine Zugfestigkeit von 3000-3500 MPa und eine Reissdehnung von 4.5-4.8%), A-Glasfasern (63-72% Siliciumdioxid, 6-10% Calciumoxid, 14-16% Natrium- und Kaliumoxid, 0-6% Aluminiumoxid, 0-6% Boroxid, 0-4% Magnesiumoxid), C-Glasfasern (64-68% Siliciumdioxid, 11-15% Calciumoxid, 7-10% Natrium- und Kaliumoxid, 3-5% Aluminiumoxid, 4-6% Boroxid, 2-4% Magnesiumoxid), D-Glasfasern (72-75% Siliciumdioxid, 0-1% Calciumoxid, 0-4% Natrium- und Kaliumoxid, 0-1% Aluminiumoxid, 21-24% Boroxid), Basaltfasern (Mineralfaser mit der ungefähren Zusammensetzung: 52% SiO₂, 17% Al₂O₃, 9% CaO, 5% MgO, 5% Na₂O, 5% Eisenoxid sowie weiteren Metalloxiden), AR-Glasfasern (55-75% Siliciumdioxid, 1-10% Calciumoxid, 11-21% Natrium- und Kaliumoxid, 0-5% Aluminiumoxid, 0-8% Boroxid, 0-12%Titandioxid, 1-18% Zirkonoxid, 0-5% Eisenoxid) sowie Mischungen davon.

Besonders bevorzugt ist Komponente B2 eine Glasfaser, die im Wesentlichen aus den Komponenten Siliciumdioxid, Calciumoxid und Aluminiumoxid aufgebaut sind und das Gewichtsverhältnis SiO₂/(CaO+MgO) kleiner 2.7, bevorzugt kleiner 2.5 und insbesondere zwischen 2.1 und 2.4 ist. Insbesondere handelt es sich bei Komponente B2 um eine E-Glasfaser gemäss ASTM D578-00.
sowie Mischungen davon.

Die faserförmigen Zuschlagsstoffe der Komponente (B1) und/oder (B2) und/oder (B3) können in Form von Kurzfasern, bevorzugt in Form von geschnittenen Fasern mit einer Länge im Bereich von 0.2-20 mm, oder in Form von oder Endlosfasern vorliegen. Bevorzugt liegt der Anteil an Komponente (C) im Bereich von 3-8 Gew.-%, vorzugsweise im Bereich von 3-6 Gew.-%.

Die Komponente (C) ist bevorzugt ein LDS-Additiv mit einem von Null verschiedenen Absorptionskoeffizienten für UV-, VIS- oder IR-Strahlung, welches unter Einwirkung von elektromagnetischer Strahlung, bevorzugt als Laserstrahlung, Metallkeime bildet, die in einem chemischen Metallisierverfahren die Abscheidung von Metallschichten zur Erzeugung von Leiterbahnen an den bestrahlten Stellen auf der Formteiloberfläche erleichtern und/oder ermöglichen und/oder verbessern, wobei das LDS-Additiv vorzugsweise eine Absorptionsfähigkeit im sichtbaren und infraroten Strahlungsbereich aufweist mit einem Absorptionskoeffizient von wenigstens 0.05, bevorzugt wenigstens 0.1 und insbesondere wenigstens 0.2, und/oder dass ein Absorber vorgesehen ist, der die Strahlungsenergie auf das LDS-Additiv überträgt.

Die Komponente (C) ist bevorzugt ein LDS-Additiv mit einer mittleren Partikelgrösse (D50) im Bereich von 50 - 10000 Nanometer, bevorzugt 200 bis 5000 Nanometer und besonders bevorzugt 300 bis 4000 Nanometer, und/oder einem Aspektverhältnis von höchstens 10, insbesondere von höchstens 5. Der als Mass für die Partikelgrösse angegebene D50-Wert ist ein Maß für die mittlere Teilchengröße, wobei 50 VolumenProzent der Probe feiner und die anderen 50% der Probe grober sind als der D50-Wert (Median).

Bevorzugt handelt es sich bei Komponente (C) um ein LDS (Laser Direct Structuring)-Additiv handelt ausgewählt aus der Gruppe der Metalloxide, insbesondere sogenannte Spinelle mit der allgemeinen chemischen Formel

AB₂O₄

wobei A für ein Metallkation mit der Wertigkeit 2 steht, wobei bevorzugt A ausgewählt ist aus der Gruppe bestehend aus: Magnesium, Kupfer, Kobalt, Zink, Zinn, Eisen, Mangan und Nickel sowie Kombinationen davon;
B für ein Metallkation der Wertigkeit 3, wobei bevorzugt B ausgewählt ist aus der Gruppe bestehend aus: Mangan, Nickel, Kupfer, Kobalt, Zinn, Titan, Eisen, Aluminium und Chrom sowie Kombinationen davon,
wobei insbesondere bevorzugt das LDS-Additiv ein Kupfereisenspinell, ein kupferhaltiges Magnesiumaluminiumoxide, ein Kupfer-Chrom-Mangan-Mischoxid, ein Kupfer-Mangan-Eisen-Mischoxid, gegebenenfalls jeweils mit Sauerstofffehlstellen, oder Salze und Oxide des Kupfers, wie insbesondere Kupfer(I)oxid, Kupfer(II)oxid, basische Kupferphosphate, Kupfersulfat, sowie Metallkomplexverbindungen, insbesondere Chelatkomplexe von Kupfer, Zinn, Nickel, Cobalt, Silber und Palladium oder Mischungen solcher Systeme,
und/oder insbesondere ausgewählt aus der folgenden Gruppe: Kupfer-Chrom-Mangan-Mischoxide, Kupfer-Mangan-Eisen-Mischoxide, Kupferchromoxid, Zink-Eisenoxid, Kobalt-Chromoxid, Kobalt-Aluminiumoxid, Magnesiumaluminiumoxid, sowie Mischungen und/oder oberflächenbehandelte und/oder Sauerstofffehlstellen aufweisende Formen hiervon. Möglich sind z.B. Systeme, wie sie beispielsweise in WO-A-2000/35259 oder in Kunststoffe 92 (2002) 11, 2-7 beschrieben werden.

Bevorzugt liegt der Anteil an Komponente (D) im Bereich von 0-20 Gew.-%, vorzugsweise im Bereich von 0-15 Gew.-% und besonders bevorzugt im Bereich von 2-15 Gew.-% oder 3 - 10 Gew-%. Talk beispielsweise kann die Erzeugung von Metallkeimen erleichtern.

Die Formmasse kann bevorzugt dadurch gekennzeichnet sein, dass die Polyamid-Formmasse im Wesentlichen, bevorzugt vollständig, frei von partikulärem Füllstoff der Komponente (D) ist.

Als partikuläre Füllstoffe der Komponente (D) kommen alle dem Fachmann bekannten Füllstoffe in Frage. Hierzu zählen insbesondere partikuläre Füllstoffe ausgewählt aus der Gruppe bestehend aus Talk (Magnesiumsilikat), Glimmer, Silikaten, Quarz, Wollastonit, Kaolin, Kieselsäuren, Magnesiumcarbonat, Magnesiumhydroxid, Kreide, gemahlenem oder gefälltem Calciumcarbonat, Kalk, Feldspat, anorganische Pigmente, wie z.B. Bariumsulfat, Zinkoxid, Zinksulfid, Titandioxid, Eisenoxid, Eisenmanganoxid, permanentmagnetischen oder magnetisierbaren Metallen oder Legierungen, hohlkugeligen Silikatfüllstoffen, Aluminiumoxid, Bornitrid, Borcarbid, Aluminiumnitrid, Calciumfluorid und Mischungen hiervon. Die Füllstoffe können auch oberflächenbehandelt sein.

Diese Füllstoffe (Komponente D) haben eine mittlere Partikelgrösse (D50) im Bereich von 0.1-40 µm, bevorzugt im Bereich von 0.2-20 µm, insbesondere im Bereich von 0.3-10 µm. Bevorzugt wird eine Form der partikulären Füllstoffe, bei denen die Aspektverhältnisse L/b1 und L/b2 beide höchstens 10, insbesondere höchstens 5 sind, wobei die Aspektverhältnisse durch die Quotienten aus grösster Länge L des Teilchens zu dessen mittleren Breite b1 oder b2 beschrieben werden. Dabei liegen b1 und b2, die senkrecht zueinander angeordnet sind, in einer zur Länge L senkrechten Ebene.

Natürlich können die erfindungsgemäßen thermoplastischen Polyamidformmassen weiterhin übliche und dem Fachmann allgemein bekannte Zusatzstoffe in Form der Additive (E) enthalten, die bevorzugt aus der Gruppe bestehend aus: Haftvermittlern, halogenhaltigen Flammschutzmitteln, halogenfreien Flammschutzmitteln, Stabilisatoren, Alterungsschutzmitteln, Antioxidantien, Antiozonantien, Lichtschutzmitteln, UV-Stabilisatoren, UV-Absorbern, UV-Blockern, anorganischen Hitzestabilisatoren, insbesondere auf Basis von Kupferhalogeniden und Alkalihalogeniden, organischen Hitzestabilisatoren, Leitfähigkeitsadditiven, Russ, optischen Aufhellern, Verarbeitungshilfsmitteln, Nukleierungsmitteln, Kristallisationsbeschleunigern, Kristallisationsverzögerern, Fliesshilfsmitteln, Gleitmitteln, Entformungsmitteln, Weichmachern, (organischen) Pigmenten, Farbstoffen, Markierungsstoffen und Mischungen hiervon ausgewählt sind.

Des weiteren betrifft die Erfindung ein Bauteil, insbesondere Bauteil mit elektrischen Leiterbahnen, auf Basis einer Formmasse wie oben dargestellt. Einsatzgebiete für die MID-Technologie sind der Automobilbau, die Industrieautomation, die Medizintechnik, die Hausgeräteindustrie, Unterhaltungselektronik, die Telekommunikationstechnik, die Mess- und Analysetechnik, Maschinenbau, sowie Luft- und Raumfahrt. Die Erfindung betrifft damit auch einen Artikel, insbesondere einen Schaltungsträger, enthaltend ein Formteil, hergestellt aus der erfindungsgemässen Formmasse. In einer Ausführungsform wird der Schaltungsträger genutzt, um eine Antenne auszubilden.

Solche Formteile sind beispielsweise Gehäuse oder Gehäuseteile für tragbare elektronische, wie z.B. PDAs, Mobiltelefone, andere Telekommunikations-Geräte, Gehäuse oder Gehäuseteile für Personal Computer, Notebooks, medizinische Geräte, wie z.B. Hörgeräte, Sensortechnik, oder RFID (Radio Frequency IDentification) Transponder oder Teile für den Automobilbereich, wie z.B. Airbagmodul, Multifunktionslenkrad. Aufgrund der umfangreichen Gestaltungsmöglichkeiten beim Kunststoffspritzgiessen können dreidimensionale Schaltungsträger realisiert werden. Darüber hinaus können typische mechanische Funktionen wie Halter, Führungen, Taster, Stecker oder andere Verbindungselemente integriert werden. Ebenfalls möglich sind Konnektoren für E/E und für Kraftstoffsysteme. Weitere Ausführungsformen sind in den abhängigen Ansprüchen angegeben.

### BESCHREIBUNG BEVORZUGTER AUSFÜHRUNGSFORMEN

Die Erfindung soll nachfolgend unter Verwendung von spezifischen Ausführungsbeispielen (B) beschrieben und mit den weniger leistungsfähigen Systemen nach dem Stand der Technik (VB) verglichen werden. Die in der Folge angegebenen Ausführungsbeispiele dienen zur Stützung der Erfindung und zum Nachweis der Unterschiede zum Stand der Technik, sie sollen aber nicht zur Einschränkung des allgemeinen Gegenstandes der Erfindung, wie er in den Patentansprüchen definiert ist, hinzugezogen werden.

### Beispiele B1 bis B6 und Vergleichsbeispiele VB1 bis VB6

Die in den Tabellen 1 bis 4 angegebenen Komponenten werden in einem zweiwelligen Extruder der Firma Werner und Pfleiderer mit einem Schneckendurchmesser von 25 mm bei vorgegebenen Prozessparametern (siehe Tabelle 1) compoundiert, dabei werden die Polyamidgranulate sowie die Zusatzstoffe in die Einzugszone dosiert, während die Glasfaser über einen Sidefeeder 3 Gehäuseeinheiten vor der Düse in die Polymerschmelze dosiert wird. Die Compounds zusammengefasst in Tabelle 2, 3 und 4 wurden als Strang aus einer Düse mit 3 mm Durchmesser abgezogen und nach Wasserkühlung granuliert. Das Granulat wird 24 Stunden bei 110°C im Vakuum von 30 mbar getrocknet. Bei den Formmassen der Beispiele B6 und VB6 erfolgte die Granulierung mittels einer Unterwassergranulierung bzw. Heißabschlags unter Wasser, bei der die Polymerschmelze durch eine Lochdüse gedrückt und direkt nach dem Austritt aus der Düse von einem rotierenden Messer in einem Wasserstrom granuliert wird. Nach Granulierung und Trocknung bei 120°C für 24h wurden die Granulateigenschaften gemessen und die Prüfkörper hergestellt.

**Tabelle 1: Compoundier- und Spritzgussbedingungen für die Beispiele und Vergleichsbeispiele**

| **Compoundier-/Verarbeitungsparameter** | | | | | |
|---|---|---|---|---|---|
| | | **B1, B2, VB1, VB2** | **B3, B4, VB3, VB4** | **B5, VB5** | **B6, VB6** |
| Compoundierung | Zylindertemperaturen | 260 | 270 | 250 | 330 |
| | Schneckendrehzahl | 200 | 200 | 150 | 150 |
| | Durchsatz | 10 | 10 | 8 | 8 |
| Spritzguss | Zylindertemperaturen | 260 | 260 | 240 | 330 |
| | Werkzeugtemperatur | 40 | 40 | 80 | 120 |
| | Schneckenumfangsgeschwindigkeit | 15 | 15 | 15 | 15 |

### Verarbeitung:

Die Compounds werden mit einer Spritzgussmaschine Arburg Allrounder 320-210-750 zu Probekörpern bei definierten Zylindertemperaturen der Zonen 1 bis 4 und einer definierten Werkzeugtemperatur (siehe Tabelle 1) verspritzt.

**Tabelle 2: Zusammensetzung und Eigenschaften der Beispiele B1 und B2 sowie der Vergleichsbeispiele VB1, VB2-1 bis VB2-3**

| | **Einheit** | **B1** | **B2** | **VB1** | **VB2-1** | **VB2-2** | **VB2-3** |
|---|---|---|---|---|---|---|---|
| ***Zusammensetzung*** | | | | | | | |
| PA1010 | Gew.% | 36.6 | 36.6 | 36.6 | 36.6 | 36.6 | 36.6 |
| PA 6I/6T (70:30) | Gew.-% | 9.1 | 9.1 | 9.1 | 9.1 | 9.1 | 9.1 |
| Glasfaser E10 | Gew.-% | | | 50.0 | | | 54.0 |
| Glasfaser S10 | Gew.-% | 50.0 | | | 54.0 | | |
| Glasfaser E7x28 | Gew.-% | | 50 | | | 54 | |
| Kupferchromit (Cu₂CrO₄) | Gew.-% | 4.0 | 4.0 | 4.0 | 0 | 0 | 0 |
| Irganox 1098 | Gew.-% | 0.3 | 0.3 | 0.3 | 0.3 | 0.3 | 0.3 |

| ***Eigenschaften*** | | | | | | | |
|---|---|---|---|---|---|---|---|
| Zug-E-Modul | MPa | 15300 | 12900 | 11500 | 17300 | 15500 | 14300 |
| Reissfestigkeit | MPa | 167 | 139 | 135 | 205 | 207 | 203 |
| Reissdehnung | % | 2.5 | 2.0 | 2.1 | 3.4 | 2.9 | 3.5 |
| Schlagzähigkeit 23°C | kJ/m² | 59 | 50 | 44 | 74 | 93 | 78 |
| Kerbschlagzähigkeit 23°C | kJ/m² | 11 | 9 | 8 | 14 | 20 | 14 |
| Metallisierindex - | - | 0.65 | 0.70 | 0.68 | n.b. | n.b. | n.b. |
| Haftfestigkeit | [N/mm] | 1.35 | 1.48 | 1.16 | n.b. | n.b. | n.b. |
| Haftfestigkeit nach Lagerung | - | 0. | 0 | 1 | n.b. | n.b. | n.b. |

**Tabelle 3: Zusammensetzung und Eigenschaften der Beispiele B3 und B4 sowie der Vergleichsbeispiele VB3, VB4-1 bis VB4-3**

| | Einheit | **B3** | **B4** | **VB3** | **VB4-1** | **VB4-2** | **VB4-3** |
|---|---|---|---|---|---|---|---|
| ***Zusammensetzung*** | | | | | | | |
| PA 12 | Gew.-% | 45.7 | 45.7 | 45.7 | 49.7 | 49.7 | 49.7 |
| Glasfaser E10 | Gew.-% | | | 50.0 | | | 50.0 |
| Glasfaser S10 | Gew.-% | 50.0 | | | 50.0 | | |
| Glasfaser E7x28 | Gew.-% | | 50 | | | 50 | |
| Kupferchromit (Cu₂CrO₄) | Gew.-% | 4.0 | 4.0 | 4.0 | 0 | 0 | 0 |
| Irganox 1098 | Gew.-% | 0.3 | 0.3 | 0.3 | 0.3 | 0.3 | 0.3 |

| ***Eigenschaften*** | | | | | | | |
|---|---|---|---|---|---|---|---|
| Zug-E-Modul | MPa | 12900 | 12400 | 11100 | 13500 | 13200 | 12000 |
| Reissfestigkeit | MPa | 152 | 119 | 115 | 165 | 180 | 160 |
| Reissdehnung | % | 3.3 | 2.6 | 2.8 | 5.5 | 3.3 | 5.3 |
| Schlagzähigkeit 23°C | kJ/m² | 65 | 55 | 48 | 78 | 98 | 73 |
| Kerbschlagzähigkeit 23°C | kJ/m² | 18 | 16 | 12 | 24 | 29 | 23 |
| Metallisierindex | - | 0.46 | 0.52 | 0.49 | n.b. | n.b. | n.b. |
| Haftfestigkeit | [N/mm] | 0.94 | 1.01 | 1.06 | n.b. | n.b. | n.b. |
| Haftfestigkeit nach Lagerung | - | 0 | 0 | 0 | n.b. | n.b. | n.b. |

**Tabelle 4: Zusammensetzung und Eigenschaften der Beispiele B5 und B6 sowie der Vergleichsbeispiele VB5 und VB6**

| | Einheit | **B5** | **VB5** | **B6** | **VB6** |
|---|---|---|---|---|---|
| ***Zusammensetzung*** | | | | | |
| PA1010 | Gew.-% | 44.6 | 44.6 | | |
| PA 6I/6T (70:30) | Gew.-% | 11.1 | 11.1 | | |
| PA6T/6I/10T/10I | Gew.-% | | | 67.7 | 67.7 |
| Glasfaser E10 | Gew.-% | | 30.0 | | 30 |
| Glasfaser S10 | Gew.-% | | | | |
| Glasfaser E7x28 | Gew.-% | 30.0 | | 30 | |
| Kupferchromit (Cu₂CrO₄) | Gew.-% | 4.0 | 4.0 | 3.0 | 3.0 |
| Irganox 1098 | Gew.-% | 0.3 | 0.3 | 0.3 | 0.3 |
| Mikrotalk IT extra | Gew.-% | 10.0 | 10.0 | | |

| ***Eigenschaften*** | | | | | |
|---|---|---|---|---|---|
| Zug-E-Modul | MPa | 11200 | 10100 | 11300 | 10900 |
| Reissfestigkeit | MPa | 120 | 110 | 155 | 143 |
| Reissdehnung | % | 2.1 | 2.1 | 2.2 | 1.8 |
| Schlagzähigkeit 23°C | kJ/m² | 48 | 32 | 59 | 35 |
| Kerbschlagzähigkeit 23°C | kJ/m² | 10 | 7 | 16 | 9 |
| Metallisierindex | - | 0.85 | 0.78. | 0.72 | 0.65 |
| Haftfestigkeit | [N/mm] | 1.55 | 1.40 | 0.94 | 0.88 |
| Haftfestigkeit nach Lagerung | - | 0 | 0 | 0 | 1 |

| | | | | | |
|---|---|---|---|---|---|
| n.m.: nicht metallisierbar; n.b.: nicht bestimmt | | | | | |

### Legende:

- PA 6I/6T (70:30): Amorphes, teilaromatisches Polyamid auf Basis von Terephthalsäure, Isophthalsäure und 1,6-Hexandiamin, mit einer Glasübergangstemperatur von 125°C und einer Lösungsviskosität von 1.54.
- PA 1010: Teilkristallines, aliphatisches Polyamid auf Basis von 1,10-Decandiamin und Sebacinsäure, mit einem Schmelzpunkt von 200°C und einer Lösungsviskosität von 1.78.
- PA 12: Teilkristallines, aliphatisches Polyamid auf Basis von Laurinlactam, mit einem Schmelzpunkt von 178°C und einer Lösungsviskosität von 1.96.
- PA MACM12: Amorphes Polyamid auf Basis Bis-(4-amino-3-methyl-cyclohexyl)-methan und Dodecandisäure, mit einer Glasübergangstemperatur von 156°C und einer Lösungsviskosität von 1.82.
- PA 6T/6I/10T/10I: Teilkristallines, teilaromatisches Polyamid, hergestellt aus 29.66 Gew.-% Hexandiamin, 15.35 Gew.-% Decandiamin, 47.25 Gew.-% Terephthalsäure und 7.48 Gew.-% Isophthalsäure mit einem Schmelzpunkt von 318°C und einer Lösungsviskosität von 1.62.
- Glasfaser E10: Schnittglasfasern Vetrotex 995 aus E-Glas, mit einer Länge von 4.5 mm und einem Durchmesser von 10 µm (kreisförmiger Querschnitt) von Owens Corning Fiberglas
- Glasfaser F7x28: Schnittglasfasern CSG3PA-820 aus E-Glas, mit einer Länge von 3 mm, einer Hauptquerschnittsachse von 28 µm, einer Nebenquerschnittsachse von 7 µm und einem Achsenverhältnis von 4 (nicht-kreisförmiger Querschnitt) von NITTO BOSEKI, Japan
- Glasfaser S10: Schnittglasfasern Vetrotex 995 aus S-Glas, mit einer Länge von 4.5 mm und einem Durchmesser von 10 µm (kreisförmiger Querschnitt) von Owens Corning Fiberglas
- Kupferchromit: Shepherd Schwarz 30C965 (The Shepherd Color Company), Kupferchromit (CuCr2O4) mit einer mittleren Partikelgrösse von 0.6 µm.

Entgegen den Erwartungen resultieren aus den Vergleichsversuchen VB2-1 bis VB2-3 betreffend Reissfestigkeit und Reissdehnung keine Vorteile für die Verstärkung durch S-Glasfasern oder flachen E-Glasfasern im Vergleich zur runden E-Glasfaser. Die für die Formmassen erzielten Werte für Reissfestigkeit, Reissdehnung und Schlagzähigkeit sprechen gegen die Wahl der S-Glasfaser. Die runde E-Glasfaser ist bis auf den Zug-E-Modul nahezu gleichwertig, die flache E-Glasfaser in der Reissfestigkeit und der Schlagzähigkeit deutlich überlegen.

Setzt man nun diesen Formmassen ein LDS-Additiv, wie z.B. das Kupferchromit (Spinellschwarz) in einer Konzentration von 4% zu, so verschlechtern sich die mechanischen Eigenschaften aller betrachteten Formmassen zum Teil dramatisch. Allerdings fallen mechanische Eigenschaften der mit der S-Glasfaser und mit flachen E-Glasfasern verstärkten Formmassen (B1 und B2) deutlich weniger stark ab als die auf üblichem E-Glas basierten Formmasse (VB1).

Ähnlich verhalten sich die Formmassen, welche auf Polyamid PA12 beruhen und in Tabelle 2 zusammengefasst sind. Auch hier zeigt die füllstofffreie, S-Glas verstärkte Formmasse (VB4-1) kaum Vorteile hinsichtlich der mechanischen Eigenschaften gegenüber der preisgünstigen E-Glasfaser (VB4-3), und sogar Nachteile gegenüber der flachen E-Glasfaser (VB4-2). Die flache E-Glasfaser zeigt Vorteile in der Schlagzähigkeit. Erst beim Zusatz von Kupferchromit werden die Vorteile der S-Glasfaser und der flachen E-Glasfaser sichtbar, nämlich deutlich verbesserte Reissfestigkeit, höhere Reissdehung und Schlagzähigkeit.

Auch bei einer überwiegend amorphen Matrix, wie in den Beispielen B5 und VB5, ergeben sich in etwa die gleichen Verhältnisse wie eben geschildert. Für die erfindungsgemässe Formmasse resultiert eine deutlich höhere Reissfestigkeit und verbesserte Schlagzähigkeit bei deutlich höherer Steifigkeit.

Die Messungen wurden nach folgenden Normen und an folgenden Prüfkörpern durchgeführt.

### Zug-E-Modul:

ISO 527 mit einer Zuggeschwindigkeit von 1 mm/min
ISO-Zugstab, Norm: ISO/CD 3167, Typ Al, 170 x 20/10 x 4 mm, Temperatur 23 °C

### Reissfestigkeit, Reissdehung:

ISO 527 mit einer Zuggeschwindigkeit von 5 mm/min
ISO-Zugstab, Norm: ISO/CD 3167, Typ Al, 170 x 20/10 x 4 mm, Temperatur 23 °C

### Schlagzähigkeit, Kerbschlagzähigkeit nach Charpy:

ISO 179
ISO-Prüfstab, Norm: ISO/CD 3167, Typ B1, 80x10x4 mm bei Temperatur 23 °C

### Schmelzpunkt (Tm), Schmelzenthalpie (ΔHm) und Glasumwandlungstemperatur (Tg):

ISO-Norm 11357-11-2
Granulat

Die Differential Scanning Calorimetry (DSC) wurde mit Aufheizrate von 20 °C/min durchgeführt. Für die Glasumwandlungstemperatur (Tg) wird die Temperatur für den Onset angegeben.

### Relative Viskosität:

DIN EN ISO 307, in 0,5 Gew.-%-iger m-Kresollösung, Temperatur 20°C
Granulat

### Laserstrukturierung:

Zur Beurteilung des Metallisierungsverhaltens wurden spritzgegossene Formteile (Platte 60 x 60 x 2 mm) mit Hilfe eines Nd:YAG-Lasers strukturiert und nachfolgend stromlos im Verkupferungsbad metallisiert. Bei der Laserstrukturierung wurden auf der Formteiloberfläche 18 nebeneinanderliegende, 5 x 7 mm grosse Bereiche bestrahlt. Die Laserstrukturierung erfolgte mittels eines LPKF Microline 3D Lasers bei einer Wellenlänge von 1064 nm und einer Bestrahlungsbreite von circa 50 µm bei einer Geschwindigkeit von 4 m/s. Dabei wurde sowohl die Pulsfrequenz als auch die Leistung des Lasers variiert. Für die konkreten Pulsfrequenzen von 60, 80 und 100 kHz wurde die Leistung jeweils im Bereich von 3 - 17 Watt variiert. Im Anschluss an die Laserstrukturierung werden die Formteile einem Reinigungsprozess zur Entfernung der Rückstände des Laserprozesses unterworfen. Die Formteile durchlaufen dabei nacheinander Ultraschallbäder mit Tensid und deionisiertem Wasser. Die gereinigten Formteile werden sodann in einem reduktiven Verkupferungsbad (MacDermid MID-Copper 100 B1) für 60 - 80 Minuten metallisiert. Dabei scheidet sich auf den vom Laser bestrahlten Flächen Kupfer in einer durchschnittlichen Dicke von 3 bis 5 µm ab.

### Metallisierindex:

Der Metallisierungsgrad wurde im Vergleich zu einem Referenzmaterial (PBT Pocan 7102) bestimmt. Dabei wird der Quotient (= Metallisierindex) aus der Kupferschichtdicke auf dem betreffenden Material und der auf dem Referenzmaterial ermittelt. Die Bestimmung der Schichtdicke der Leiterbahn erfolgt mittels Röntgenfluoreszenzspektroskopie.

### Haftfestigkeit:

Die Haftung der erzeugten Kupferleitungsbahnen wird in einem Schältest gemäss DIN IEC 326-3-7.1 gemessen.

### Haftfestigkeit nach Lagerung:

Die Haftung der Kupferschicht nach verschiedenen Lagerbedingungen wird mittels Gitterschnittprüfung in Anlehnung an EN DIN ISO 2409 ausgeführt. Hierzu werden mit einem Mehrschneidenmesser je 6 bis auf den Untergrund (Substrat) durchgehende Schnitte im rechten Winkel mit einem Schnittabstand von 1 mm zueinander ausgeführt, so dass ein Gitterschnitt-Kreuz entsteht. Anschließend wird ein Klebeband mit definierter Haftkraft auf den Gitterschnitt gedrückt und wieder abgezogen, so dass lose oder schwach am Substrat haftende Kupferschichtbereiche entfernt werden. Die visuelle Beurteilung wird mit Hilfe einer beleuchteten Lupe durchgeführt. Die Einstufung des Haftungsgrads erfolgt gemäss den Kennwerten 0-5, die wie folgt definiert sind:
- 0:: Die Schnittränder sind vollkommen glatt; keines der Quadrate des Gitters ist abgeplatzt.
- 1:: An den Schnittpunkten der Gitterlinien sind kleine Splitter der Beschichtung abgeplatzt; abgeplatzte Fläche nicht grösser als 5% der Gitterschnittfläche.
- 2:: Die Beschichtung ist längs der Schnittränder und/oder an den Schnittpunkten der Gitterlinien abgeplatzt. Abgeplatzte Fläche grösser als 5%, aber nicht grösser als 15% der Gitterschnittfläche.
- 3:: Die Beschichtung ist längs der Schnittränder teilweise oder ganz in breiten Streifen abgeplatzt, und/oder einige Quadrate sind teilweise oder ganz abgeplatzt. Abgeplatzte Fläche grösser als 30%, aber nicht grösser als 50% der Gitterschnittfläche.
- 4:: Die Beschichtung ist längs der Schnittränder in breiten Streifen abgeplatzt, und/oder einige Quadrate sind ganz oder teilweise abgeplatzt. Abgeplatzte Fläche grösser als 35%, aber nicht grösser als 65% der Gitterschnittfläche.
- 5:: Jedes Abplatzen, das nicht mehr als Gitterschnitt-Kennwert 4 eingestuft werden kann.

### Lagerbedingungen:

Die Messung der Haftung der Leiterbahn mit Hilfe des oben beschriebenen Gitterschnitttestes erfolgt nach zwei verschiedenen Lagerungsphasen unter folgenden Bedingungen:
- Profil 1: trocken, Temperaturwechsel von -40°C bis 85°C, 6 Zyklen mit jeweils 8 h Dauer.
- Profil 2: 95% relativer Feuchte, Temperaturwechsel von 25°C bis 55°C, 6 Zyklen mit jeweils 24 h Dauer.

Die chemisch-reduktive Kupferabscheidung ist bei allen MID-Technologien der entscheidende Startmetallisierungsprozess, der über die Qualität der Gesamtschicht entscheidet. Deshalb ist es völlig ausreichend, die Qualität der Primärmetallschicht zu beurteilen. Um zum fertigen MID-Teil zu kommen, werden aufbauend auf der ersten Kupferschicht (Primärschicht) in der Regel Nickel und anschliessend eine Endschicht aus Tauchgold abgeschieden. Selbstverständlich können auch andere Metallschichten, wie z.B. weitere Kupfer-, Palladium-, Zinn- oder Silberschichten auf die Primärschicht aufgebracht werden.

## Patentansprüche

1. Thermoplastische Formmasse bestehend aus:
(A) 20 - 88 Gew.-% thermoplastischem Kunststoff;
(B) 10 - 60 Gew.-% faserförmigen Zuschlagstoffen, aufgebaut aus
(B1) 10 - 60 Gew.-%
Glasfasern (B1_1) mit nicht-kreisförmigem Querschnitt, wobei das Achsenverhältnis der Hauptquerschnittsachse zur Nebenquerschnittsachse wenigstens 2 ist;
(B2) 0 - 20 Gew.-% von den Glasfasern der Komponente (B1) verschiedene Glasfasern mit kreisförmigem Querschnitt;
(B3) 0 - 20 Gew.-% weitere, von den Fasern der Komponenten (B1) und (B2) verschiedene faserförmige, nicht auf Glas basierende Zuschlagstoffe ausgewählt aus der Gruppe: Kohlenstoffasern, Graphitfasern, Aramidfasern, Nanotubes;
(C) 2 - 10 Gew.-% LDS-Additiv oder eine Mischung von LDS-Additiven;
(D) 0 - 30 Gew.-% partikulärer Füllstoff;
(E) 0 - 2 Gew.-% weitere andere Additive;
wobei die Summe aus (A) - (E) 100 Gew.-% ausmacht.

2. Formmasse nach Anspruch 1, **dadurch gekennzeichnet, dass** die Komponente (A) aus Polyamid (A1) oder einer Mischung von Polyamiden besteht, mit der Massgabe, dass bis zu 40%, vorzugsweise bis zu 20%, bis zu 10% oder bis zu 5%, davon ersetzt sein können durch einen thermoplastischen Kunststoff (A2) nicht auf Polyamidbasis, wobei vorzugsweise im wesentlichen kein solcher thermoplastischen Kunststoff (A2) nicht auf Polyamidbasis enthalten ist.

3. Formmasse nach Anspruch 2, **dadurch gekennzeichnet, dass** der Anteil an Komponente (A) im Bereich von 25-82 Gew.-% liegt, vorzugsweise im Bereich von 30-77 Gew.-%, wobei vorzugsweise auch der Gesamtanteil von (A) in Form von Polyamid (A1) im Bereich von 25-82 Gew.-% liegt, insbesondere vorzugsweise im Bereich von 30-77 Gew.-%.

4. Formmasse nach einem der vorhergehenden Ansprüche 2 oder 3, **dadurch gekennzeichnet, dass** der thermoplastischen Kunststoff (A2) nicht auf Polyamidbasis ausgewählt aus der Gruppe bestehend aus: Polycarbonat, Polystyrol, Polymethylmethacrylat, Acrylnitril-Butadien-Styrol-Copolymerisat, Acrylnitril-Styrol-Copolymer, Polyolefin, Polyoxymethylen, Polyester, insbesondere Polyethylenterephthalat, Polybutylenterephthalat, Polysulfon (insbesondere des Typs PSU, PESU, PPSU), Polyphenylenether, Polyphenylensulfid, Polyphenylenoxid, Flüssigkristalline Polymere, Polyetherketon, Polyetheretherketon, Polyimid, Polyamidimid, Polyesterimid, Polyetheramid, Polyesteramid, Polyetheresteramid, Polyurethan (insbesondere des Typs TPU, PUR), Polysiloxan, Polyacrylat, Polymethacrylat sowie Mischungen oder Copolymere auf Basis solcher Systeme.

5. Formmasse nach einem der vorhergehenden Ansprüche, **dadurch gekennzeichnet, dass** der Anteil an Komponente (B1) im Bereich von 30-65 Gew.-% liegt, vorzugsweise im Bereich von 35-60 Gew.-%, wobei weiterhin vorzugsweise die Anteile von (B2) und/oder (B3) null sind.

6. Formmasse nach einem der vorhergehenden Ansprüche, **dadurch gekennzeichnet, dass** die Glasfasern der Komponente (B1_1) als E-Glasfasern gemäss ASTM D578-00 mit nicht-kreisförmigem Querschnitt ausgewählt sind, vorzugsweise aus 52-62% Siliciumdioxid, 12-16% Aluminiumoxid, 16-25% Calciumoxid, 0-10% Borax, 0-5% Magnesiumoxid, 0-2% Alkalioxide, 0-1.5% Titandioxid und 0-0.3% Eisenoxid.

7. Formmasse nach einem der vorhergehenden Ansprüche, **dadurch gekennzeichnet, dass** der Anteil an Komponente (C) im Bereich von 3-8 Gew.-% liegt, vorzugsweise im Bereich von 3-6 Gew.-%.

8. Formmasse nach einem der vorhergehenden Ansprüche, **dadurch gekennzeichnet, dass** die Komponente (C) ein LDS-Additiv mit einem von Null verschiedenen Absorptionskoeffizienten für UV-, VIS- oder IR-Strahlung ist, welches unter elektromagnetischer, insbesondere Laser-Einstrahlung Metallkeime bildet und an den bestrahlten Stellen die chemische metallisierende Abscheidung von Leiterbahnen erleichtert und/oder ermöglicht und/oder verbessert, wobei das LDS-Additiv vorzugsweise eine Absorptionsfähigkeit im sichtbaren und infraroten Strahlungsbereich aufweist mit einem Absorptionskoeffizient von wenigstens 0.05, bevorzugt wenigstens 0.1 und insbesondere wenigstens 0.2, und/oder dass ein Absorber vorgesehen ist, der die Strahlungsenergie auf das LDS-Additiv überträgt.

9. Formmasse nach Anspruch 8, **dadurch gekennzeichnet, dass** die Komponente (C) ein LDS-Additiv mit einer durchschnittlichen Partikelgrösse (D50) im Bereich von 50 - 10000 Nanometer, bevorzugt 200 bis 5000 Nanometer und besonders bevorzugt 300 bis 4000 Nanometer ist, und/oder ein Aspektverhältnis von höchstens 10, insbesondere von höchstens 5 aufweist.

10. Formmasse nach einem der vorhergehenden Ansprüche, **dadurch gekennzeichnet, dass** es sich bei Komponente (C) um ein LDS-Additiv handelt ausgewählt aus der Gruppe der Metalloxide, insbesondere sogenannte Spinelle mit der allgemeinen chemischen Formel
AB₂O₄
wobei steht A für ein Metallkation mit der Wertigkeit 2, wobei bevorzugt A ausgewählt ist aus der Gruppe bestehend aus: Magnesium, Kupfer, Kobalt, Zink, Eisen, Mangan, Zinn und Nickel sowie Kombinationen davon;
B für ein Metallkation der Wertigkeit 3, wobei bevorzugt B ausgewählt ist aus der Gruppe bestehend aus: Mangan, Nickel, Kupfer, Kobalt, Zinn, Titan, Eisen, Aluminium und Chrom sowie Kombinationen davon,
wobei insbesondere bevorzugt das LDS-Additiv ein Kupfereisenspinell, ein kupferhaltiges Magnesiumaluminiumoxide, ein Kupfer-Chrom-Mangan-Mischoxid, ein Kupfer-Mangan-Eisen-Mischoxid, gegebenenfalls jeweils mit Sauerstofffehlstellen, oder Salze und Oxide des Kupfers, wie insbesondere Kupfer(I)oxid, Kupfer(II)oxid, basische Kupferphosphate, Kupfersulfat, sowie Metallkomplexverbindungen, insbesondere Chelatkomplexe von Kupfer, Zinn, Nickel, Cobalt, Silber und Palladium oder Mischungen solcher Systeme, und/oder insbesondere ausgewählt aus der folgenden Gruppe: Kupfer-Chrom-Mangan-Mischoxide, Kupfer-Mangan-Eisen-Mischoxide, Kupferchromoxid, Zink-Eisenoxid, Kobalt-Chromoxid, Kobalt-Aluminiumoxid, Magnesiumaluminiumoxid, sowie Mischungen und/oder oberflächenbehandelte und/oder Sauerstofffehlstellen aufweisende Formen hiervon.

11. Formmasse nach einem der vorhergehenden Ansprüche, **dadurch gekennzeichnet, dass** der Anteil an Komponente (D) im Bereich von 0-20 Gew.-% liegt, vorzugsweise im Bereich von 0-15 Gew.-%, besonders bevorzugt im Bereich vom 2 - 15 Gew.-% oder 3 - 10 Gew.-%.

12. Formmasse nach einem der vorhergehenden Ansprüche, **dadurch gekennzeichnet, dass**, der partikuläre Füllstoff Partikel einer mittleren Partikelgrösse (D50) im Bereich von 0.1-40 µm, vorzugsweise von 0.2-20 µm, insbesondere im Bereich von 0.3-10 µm, und/oder ein Aspektverhältnis von höchstens 10, insbesondere von höchstens 5 aufweist oder im wesentlichen durch solche Partikel gebildet wird.

13. Formmasse nach einem der vorhergehenden Ansprüche, **dadurch gekennzeichnet, dass** die Komponente (A) ausgewählt ist aus der Gruppe bestehend aus: Polyamid, Polycarbonat, Polystyrol, Polymethylmethacrylat, Acrylnitril-Butadien-Styrol-Copolymerisat, Acrylnitril-Styrol-Copolymer, Polyolefin, Polyoxymethylen, Polyester, insbesondere Polyethylenterephthalat, Polybutylenterephthalat, Polysulfon, insbesondere des Typs PSU, PESU, PPSU, Polyphenylenether, Polyphenylensulfid, Polyphenylenoxid, flüssigkristalline Polymere, Polyetherketon, Polyetheretherketon, Polyimid, Polyamidimid, Polyesterimid, Polyetheramid, Polyesteramid, Polyetheresteramid, Polyurethan, insbesondere des Typs TPU, PUR, Polysiloxan, Polyacrylat, Polymethacrylat sowie Mischungen oder Copolymere auf Basis solcher Systeme, weiterhin bevorzugt in Kombination mit einem oder mehreren Schlagzähmodifikatoren,
und/oder dass bevorzugtermassen der Anteil der Komponente (A2), im Bereich von 0-20 Gew.-% liegt, vorzugsweise im Bereich von 0-10 Gew.-% oder im Bereich von 0-5 Gew.-%, wobei insbesondere vorzugsweise ausschliesslich Komponente (A1) vorhanden ist;
und/oder das der Anteil an Komponente (B2), vorzugsweise ausgewählt aus der Gruppe bestehend aus E-Glasfasern, A-Glasfasern, C-Glasfasern, D-Glasfasern, Balsaltfasern sowie Mischungen davon, jeweils mit kreisförmiger oder nicht-kreisförmiger Querschnittsfläche, im Bereich von 0-10 Gew.-% liegt, vorzugsweise im Bereich von 0-5 Gew.-%, wobei insbesondere vorzugsweise ausschliesslich Komponente (B1) vorhanden ist.

14. Formmasse nach einem der vorhergehenden Ansprüche, **dadurch gekennzeichnet, dass** die Glasfasern der Komponente (B1) und/oder (B2) und/oder (B3) in Form von Kurzfasern, bevorzugt in Form von Schnittglas mit einer Länge im Bereich von 0.2-20 mm, oder in Form von oder Endlosfasern vorliegen.

15. Bauteil, insbesondere Bauteil mit elektrischen Leiterbahnen, auf Basis einer Formmasse nach einem der vorhergehenden Ansprüche, bevorzugt als Gehäuse oder Gehäuseteil für tragbare elektronische Geräte, wie insbesondere PDAs, Mobiltelefone, Telekommunikations-Geräte, Gehäuse oder Gehäuseteile für Personal Computer, Notebooks, medizinische Geräte, wie insbesondere Hörgeräte, Sensortechnik, oder RFID Transponder oder Teile für den Automobilbereich, wie insbesondere Airbagmodul, Multifunktionslenkrad.

## Claims

1. A thermoplastic moulding composition consisting of:
(A) 20-88 % by weight of a thermoplastic material;
(B) 10-60 % by weight of fibrous fillers, formed from
(B1) 10-60 % by weight of glass fibres (B1_1) with a non-circular cross section, wherein the axis ratio of the main cross-sectional axis to the secondary cross-sectional axis is at least 2;
(B2) 0-20 % by weight of glass fibres, which are different from the glass fibres of component (B1) and have a circular cross section;
(B3) 0-20 % by weight of further fibrous fillers, which are different from the fibres of components (B1) and (B2), are not based on glass, and are selected from the group: carbon fibres, graphite fibres, aramid fibres, nanotubes;
(C) 2-10 % by weight of LDS additive or a mixture of LDS additives;
(D) 0-30 % by weight of particulate filler;
(E) 0-2 % by weight of further, different additives;
wherein the sum of (A)-(E) makes up 100 % by weight.

2. The moulding composition according to Claim 1, **characterised in that** the component (A) consists of polyamide (A1) or a mixture of polyamides, with the proviso that up to 40 %, preferably up to 20 %, up to 10 % or up to 5 % thereof can be replaced by a thermoplastic material (A2) not based on polyamide, wherein substantially no such thermoplastic material (A2) not based on polyamide is preferably contained.

3. The moulding composition according to Claim 2, **characterised in that** the proportion of component (A) lies in the range of 25-82 % by weight, preferably in the range of 30-77 % by weight, wherein the total proportion of (A) in the form of polyamide (A1) is also preferably in the range of 25-82 % by weight, particularly preferably in the range of 30-77 % by weight.

4. The moulding composition according to one of the preceding claims 2 or 3, **characterised in that** by the thermoplastic material (A2) not based on polyamide is selected from the group consisting of: polycarbonate, polystyrene, polymethyl methacrylate, acrylonitrile butadiene styrene copolymer, acrylonitrile styrene copolymer, polyolefin, polyoxymethylene, polyester, in particular polyethylene terephthalate, polybutylene terephthalate, polysulfone (in particular of the PSU, PESU, PPSU type), polyphenylene ether, polyphenylene sulphide, polyphenylene oxide, liquid-crystalline polymers, polyether ketone, polyether ether ketone, polyimide, polyamide imide, polyester imide, polyether amide, polyester amide, polyether ester amide, polyurethane (in particular of the TPU, PUR type), polysiloxane, polyacrylate, polymethacrylate and mixtures or copolymers based on such systems.

5. The moulding composition according to one of the preceding claims, **characterised in that** the proportion of component (B1) lies the range of 30-65 % by weight, preferably in the range of 35-60 % by weight, wherein the proportions of (B2) and/or (B3) are further preferably zero.

6. The moulding composition as claimed in one of the preceding claims, **characterised in that** the glass fibres of component (B1_1) are selected as E-glass fibres in accordance with ASTM D578-00 with a non-circular cross section, preferably consisting of 52-62 % of silicon dioxide, 12-16 % of aluminium oxide, 16-25 % of calcium oxide, 0-10 % of borax, 0-5 % of magnesium oxide, 0-2 % of alkali oxides, 0-1.5 % of titanium dioxide and 0-0.3 % of iron oxide.

7. The moulding composition according to one of the preceding claims, **characterised in that** the proportion of component (C) lies in the range of 3-8 % by weight, preferably in the range of 3-6 % by weight.

8. The moulding composition according to one of the preceding claims, **characterised in that** the component (C) is an LDS additive with an absorption coefficient, different from zero, for UV, VIS or IR radiation, which forms metal nuclei under the action of electromagnetic radiation, in particular laser radiation, and facilitates and/or enables and/or improves the chemical metallising deposition of conductor tracks at the irradiated points, wherein the LDS additive preferably has an absorption capability in the visible and infrared radiation range with an absorption coefficient of at least 0.05, preferably at least 0.1, and in particular at least 0.2, and/or wherein an absorber is provided, which transfers the radiation energy to the LDS additive.

9. The moulding composition according to Claim 8, **characterised in that** the component (C) is an LDS additive with an average particle size (D50) in the range of 50-10,000 nanometres, preferably 200 to 5,000 nanometres and particularly preferably 300 to 4,000 nanometres, and/or has an aspect ratio of at most 10, in particular of at most 5.

10. The moulding composition according to one of the preceding claims, **characterised in that** the component (C) is an LDS additive selected from the group of metal oxides, in particular what are known as spinels having the general chemical formula
AB₂O₄
wherein A stands for a metal cation with the valency 2, wherein A is preferably selected from the group consisting of: magnesium, copper, cobalt, zinc, iron, manganese, tin and nickel, and also combinations thereof;
B stands for a metal cation of valency 3, wherein B is preferably selected from the group consisting of: manganese, nickel, copper, cobalt, tin, titanium, iron, aluminium and chromium, and also combinations thereof,
wherein the LDS additive particularly preferably is a copper iron spinel, a cupriferous magnesium aluminium oxide, a copper chromium manganese mixed oxide, a copper manganese iron mixed oxide, optionally in each case with oxygen defects, or copper salts and oxides, in particular such as copper(I) oxide, copper(II) oxide, alkaline copper phosphates, copper sulphate, and also metal complex compounds, in particular chelate compounds of copper, tin, nickel, cobalt, silver and palladium, or mixtures of such systems,
and/or in particular is selected from the following group: copper chromium manganese mixed oxides, copper manganese iron mixed oxides, copper chromium oxide, zinc iron oxide, cobalt chromium oxide, cobalt aluminium oxide, magnesium aluminium oxide, and mixtures and/or surface-treated forms thereof and/or forms thereof having oxygen defects.

11. The moulding composition according to one of the preceding claims, **characterised in that** the proportion of component (D) lies in the range of 0-20 % by weight, preferably in the range of 0-15 % by weight, particularly preferably in the range of 2-15 % by weight or 3-10 % by weight.

12. The moulding composition according to one of the preceding claims, **characterised in that** the particulate filler has particles of a mean particle size (D50) in the range of 0.1-40 µm, preferably of 0.2-20 µm, in particular in the range of 0.3-10 µm, and/or has an aspect ratio of at most 10, in particular of at most 5, or is formed substantially by such particles.

13. The moulding composition according to one of the preceding claims, **characterised in that** the component (A) is selected from the group consisting of: polyamide, polycarbonate, polystyrene, polymethyl methacrylate, acrylonitrile butadiene styrene copolymer, acrylonitrile styrene copolymer, polyolefin, polyoxymethylene, polyester, in particular polyethylene terephthalate, polybutylene terephthalate, polysulfone, in particular of the PSU, PESU, PPSU type, polyphenylene ether, polyphenylene sulphide, polyphenylene oxide, liquid-crystalline polymers, polyether ketone, polyether ether ketone, polyimide, polyamide imide, polyester imide, polyether amide, polyester amide, polyether ester amide, polyurethane, in particular of the TPU, PUR type, polysiloxane, polyacrylate, polymethacrylate, and mixtures or copolymers based on such systems, furthermore preferably in combination with one or more impact toughness modifiers,
and/or **in that** the proportion of component (A2) preferably lies in the range of 0-20 % by weight, preferably in the range of 0-10 % by weight or in the range 0-5 % by weight, wherein component (A1) is particularly preferably provided exclusively;
and/or **in that** the proportion of component (B2), preferably selected from the group consisting E-glass fibres, A-glass fibres, C-glass fibres, D-glass fibres, basalt fibres and mixtures thereof, in each case with a circular or a non-circular cross-sectional area; lies in the range of 0-10 % by weight, preferably in the range of 0-5 % by weight, wherein component (B1) is particularly preferably provided exclusively.

14. The moulding composition according to one of the preceding claims, **characterised in that** the glass fibres of component (B1) and/or (B2) and/or (B3) are present in the form of short fibres, preferably in the form of cut glass with a length in the range of 0.2-20 mm, or in the form of endless fibres.

15. A component, in particular a component having electrical conductor tracks, based on a moulding composition according to one of the preceding claims, preferably as a casing or casing part for portable electronic devices, in particular such as PDAs, mobile telephones, telecommunications devices, casings or casing parts for personal computers, notebooks, medical devices, in particular such as hearing aids, sensor technology, or RFID transponders or parts for the automotive field, in particular such as air bag modules and multi-function steering wheels.

## Revendications

1. Masse moulable thermoplastique, constituée de
(A) 20 à 88 % en poids d'une matière thermoplastique ;
(B) 10 à 60 % en poids d'additions fibreuses, constituées de
(B1) 10 à 60 % en poids de fibres de verre (B1_1) ayant une section transversale non-circulaire, le rapport d'axes entre l'axe principal de section transversale et l'axe secondaire de section transversale étant supérieur ou égal à 2 ;
(B2) 0 à 20 % en poids de fibres de verre qui ont une section transversale de forme circulaire et qui sont différentes des fibres de verre du composant (B1) ;
(B3) 0 à 20 % en poids d'autres additions qui ne sont pas à base de verre et qui sont différentes des fibres des composants (B1) et (B2), choisies dans le groupe constitué de : fibres de carbone, fibres de graphite, fibres d'aramide, nanotubes ;
(C) 2 à 10 % en poids d'un additif LDS ou d'un mélange d'additifs LDS ;
(D) 0 à 30 % en poids d'une charge particulaire ;
(E) 0 à 2 % en poids d'autres additifs ; la somme de (A) à (E) étant égale à 100 % en poids.

2. Masse moulable selon la revendication 1, **caractérisée en ce que** le composant (A) est constitué d'un polyamide (A1) ou d'un mélange de polyamides, à condition que jusqu'à 40 %, de préférence jusqu'à 20 %, jusqu'à 10 % ou jusqu'à 5 %, puissent en être remplacés par une matière thermoplastique (A2) qui n'est pas à base de polyamide, ladite masse étant de préférence sensiblement exempte d'une telle matière thermoplastique (A2) qui n'est à base de polyamide.

3. Masse moulable selon la revendication 2, **caractérisée en ce que** la proportion du composant (A) est comprise entre 25 et 82 % en poids, de préférence entre 30 et 77 % en poids, la proportion globale de (A) sous forme du polyamide (A1) étant de préférence également comprise entre 25 et 82 % en poids, avec une préférence particulière entre 30 et 77 % en poids.

4. Masse moulable selon l'une des revendications précédentes 2 ou 3, **caractérisée en ce que** la matière thermoplastique (A2), laquelle n'est pas à base de polyamide, est choisie dans le groupe constitué de : polycarbonate, polystyrène, polyméthylméthacrylate, copolymère de type acrylonitrile-butadiène-styrène, copolymère d'acrylonitrile-styrène, polyoléfine, polyoxyméthylène, polyester, notamment polyéthylènetéréphtalate, polybutylènetéréphthalate, polysulfone (notamment de type PSU, PESU, PPSU), polyphénylène-éther, poly(sulfure de phénylène), poly(oxyde de phénylène), polymères se présentant sous forme de cristaux liquides, polyéthercétone, polyétheréthercétone, polyimide, polyamide-imide, polyesterimide, polyétheramide, polyesteramide, polyétheresteramide, polyuréthane (notamment de type TPU, PUR), polysiloxane, polyacrylate, polyméthacrylate ainsi que de mélanges ou copolymères à base de tels systèmes.

5. Masse moulable selon l'une des revendications précédentes, **caractérisée en ce que** la proportion du composant (B1) est comprise entre 30 et 65 % en poids, de préférence entre 35 et 60 % en poids, les proportions de (B2) et/ou de (B3) étant en outre préférentiellement égales à zéro.

6. Masse moulable selon l'une des revendications précédentes, **caractérisée en ce que** les fibres de verre du composant (B1_1), lesquelles sont choisies à titre de fibres de verre de type E selon ASTM D578-00 ayant une section transversale de forme non-circulaire, sont constituées préférentiellement de 52 à 62 % de silice, de 12 à 16 % de alumine, de 16 à 25 % d'oxyde de calcium, de 0 à 10 % de borax, de 0 à 5 % d'oxyde de magnésium, de 0 à 2 % d'oxyde alcalin, de 0 à 1,5 % de dioxyde de titane et de 0 à 0,3 % d'oxyde de fer.

7. Masse moulable selon l'une des revendications précédentes, **caractérisée en ce que** la proportion du composant (C) est comprise entre 3 et 8 % en poids, de préférence entre 3 et 6 % en poids.

8. Masse moulable selon l'une des revendications précédentes, **caractérisée en ce que** le composant (C) est un additif LDS ayant un coefficient d'absorption qui est différent de zéro en ce qui concerne les rayonnements UV, VIS ou IR, ledit additif étant générateur de germes métalliques sous l'effet d'un faisceau électromagnétique, notamment de type laser, les sites ainsi irradiés facilitant et/ou permettant et/ou améliorant alors le dépôt chimique en vue d'une mise en place de tracés conducteurs par métallisation, l'additif LDS présentant de préférence une capacité d'absorption dans le domaine du rayonnement visible et infrarouge, son coefficient d'absorption étant supérieur ou égal à 0,05, de préférence supérieur ou égal à 0,1 et notamment supérieur ou égal à 0,2, et/ou en ce qu'un dispositif d'absorption permet de transmettre l'énergie de rayonnement à l'additif LDS.

9. Masse moulable selon la revendication 8, **caractérisée en ce que** le composant (C) est un additif LDS présentant une taille moyenne des particules (D50) comprise entre 50 et 10 000 nanomètres, de préférence entre 200 et 5 000 nanomètres et, avec une préférence particulière, entre 300 et 4 000 nanomètres, et/ou un rapport d'aspect inférieur ou égal à 10, notamment inférieur ou égal à 5.

10. Masse moulable selon l'une des revendications précédentes, **caractérisée en ce que** le composant (C) est un additif LDS choisi dans le groupe des oxydes de métaux, notamment ceux dits spinelles qui répondent à la formule chimique générale
AB₂O₄
dans laquelle A représente un cation métallique divalent, A étant préférentiellement choisi dans le groupe constitué de : magnésium, cuivre, cobalt, zinc, fer, manganèse, étain et nickel ainsi que ainsi leurs combinaisons ;
B représente un cation métallique trivalent, B étant préférentiellement choisi dans le groupe constitué de : manganèse, nickel, cuivre, cobalt, étain, titane, fer, aluminium et chrome ainsi que ainsi leurs combinaisons,
l'additif LDS correspondant, avec une préférence particulière, à un spinelle de cuivre-fer, un oxyde de magnésium-aluminium contenant du cuivre, un oxyde mixte de cuivre-chrome-manganèse, un oxyde mixte de cuivre-manganèse-fer, dont chacun peut présenter le cas échéant des atomes d'oxygène manquants, ou bien à des sels et oxydes du cuivre, s'agissant notamment d'oxyde de cuivre(I), d'oxyde de cuivre (II), de phosphates de cuivre basiques, de sulfate de cuivre ainsi qu' à des complexes de métaux, notamment de complexes de type chélate que forment le cuivre, l'étain, le nickel, le cobalt, l'argent et le palladium, ou à des mélanges de tels systèmes,
et/ou étant notamment choisi dans le groupe suivant : oxydes mixtes de cuivre-chrome-manganèse, oxydes mixtes de cuivre-manganèse-fer, oxyde de cuivre-chrome, oxyde de zinc-fer, oxyde de cobalt-chrome, oxyde de cobalt-aluminium, oxyde de magnésium-aluminium ainsi que leurs mélanges et/ou leurs formes ayant subi un traitement de surface et/ou présentant des atomes d'oxygène manquants.

11. Masse moulable selon l'une des revendications précédentes, **caractérisée en ce que** la proportion du composant (D) est comprise entre 0 et 20 % en poids, de préférence entre 0 et 15 % en poids, avec une préférence particulière entre 2 et 15 % en poids ou 3 et 10 % en poids.

12. Masse moulable selon l'une des revendications précédentes, **caractérisée en ce que** la charge particulaire présente des particules dont la taille moyenne des particules (D50) est comprise entre 0,1 et 40 µm, de préférence entre 0,2 et 20 µm, notamment comprise entre 0,3 et 10 µm, et/ou un rapport d'aspect inférieur ou égal à 10, notamment inférieur ou égal à 5, ou est sensiblement constituée par de telles particules.

13. Masse moulable selon l'une des revendications précédentes, **caractérisée en ce que** le composant (A) est choisi dans le groupe constitué de : polyamide, polycarbonate, polystyrène, polyméthylméthacrylate, copolymère de type acrylonitrile-butadiène-styrène, copolymère d'acrylonitrile-styrène, polyoléfine, polyoxyméthylène, polyester, notamment polyéthylènetéréphtalate, polybutylènetéréphthalate, polysulfone, notamment de type PSU, PESU, PPSU, polyphénylène-éther, poly(sulfure de phénylène), poly(oxyde de phénylène), polymères se présentant sous forme de cristaux liquides, polyéthercétone,
polyétheréthercétone, polyimide, polyamide-imide, polyesterimide, polyétheramide, polyesteramide, polyétheresteramide, polyuréthane, notamment de type TPU, PUR, polysiloxane, polyacrylate, polyméthacrylate ainsi que de mélanges ou copolymères à base de tels systèmes, en outre préférentiellement en combinaison avec un ou plusieurs agents modificateurs de résilience,
et/ou que la proportion du composant (A2) est préférentiellement comprise entre 0 et 20 % en poids, de préférence comprise entre 0 et 10 % en poids ou comprise entre 0 et 5 % en poids, la présence exclusive du composant (A1) étant particulièrement préférée ;
et/ou que la proportion du composant (B2), lequel est préférentiellement choisi dans le groupe constitué de fibres de verre de type E, fibres de verre de type A, fibres de verre de type C, fibres de verre de type D, de fibres de basalte ainsi que de leurs mélanges, dont chacune présente une section transversale circulaire ou non-circulaire, est comprise entre 0 et 10 % en poids, de préférence entre 0 et 5 % en poids, la présence exclusive du composant (B1) étant particulièrement préférée.

14. Masse moulable selon l'une des revendications précédentes, **caractérisée en ce que** les fibres de verre du composant (B1) et/ou (B2) et/ou (B3) se présentent sous forme de fibres courtes, de préférence sous forme de verre découpé ayant une longueur comprise entre 0,2 et 20 mm, ou sous forme de fibres continues.

15. Pièce, notamment pièce pourvue de tracés conducteurs d'électricité, à base d'une masse moulable selon l'une des revendications précédentes, servant préférentiellement de boîtier ou de partie de boîtier pour des appareils électroniques portables, s'agissant particulièrement d'assistants numériques personnels, de téléphones mobiles, d'appareils de télécommunication, ou servant de boîtier ou de partie de boîtier pour des ordinateurs personnels, des ordinateurs portables, des appareils médicaux, s'agissant notamment d'appareils auditifs, pour des équipements techniques associés aux capteurs ou pour des transpondeurs RFID, ou servant de pièces pour le secteur automobile, s'agissant notamment d'un module d'airbag, d'un volant multifonction.
